# EUROPÄISCHE PATENTSCHRIFT

(11) **EP 1 363 855 B1**
(45) Veröffentlichungstag und Bekanntmachung des Hinweises auf die Patenterteilung: **25.08.2004**
(21) Anmeldenummer: 02719791.2
(22) Anmeldetag: 09.02.2002
(51) Int. Cl.: C02F 1/04, B01D 3/34, B01D 3/06, B01D 3/42, B01D 1/28

(54) **VERFAHREN UND VORRICHTUNG ZUR AUFBEREITUNG VON FLÜSSIGKEITEN**
METHOD AND DEVICE FOR TREATING LIQUIDS
PROCEDE ET DISPOSITIF DE TRAITEMENT DE LIQUIDES

(30) Priorität: 22.02.2001 DE 10108528
(43) Veröffentlichungstag der Anmeldung: 26.11.2003
(73) Patentinhaber: Neubert, Susanne, 24980 Nordhackstedt (DE)
(72) Erfinder: NEUBERT, Joachim, 24980 Nordhackstedt (DE); STAAB, Karl-Ferdinand, 71263 Weil der Stadt (DE)
(74) Vertreter: Neubauer, Hans-Jürgen, Dipl.-Phys.
(86) Internationale Anmeldenummer: PCT/EP2002/001368
(87) Internationale Veröffentlichungsnummer: WO 2002/068337

(56) Entgegenhaltungen:
- WO-A-01/03794
- WO-A-87/07847
- WO-A-98/31445

## Beschreibung

Die Erfindung betrifft ein Verfahren zur Aufbereitung von Flüssigkeiten als Aufbereitungsflüssigkeiten nach dem Oberbegriff des Anspruchs 1 sowie eine Vorrichtung zur Aufbereitung von Flüssigkeiten als Aufbereitungsflüssigkeiten nach dem Oberbegriff des Anspruchs 15.

Ein Verfahren und eine Vorrichtung zur Aufbereitung einer Abfallflüssigkeit sind bereits aus der EP 0 142 018 B1 bekannt, bei dem die Abfallflüssigkeit, die aus einer Basisflüssigkeit und darin vorhandenen, nicht verdampfbaren Feststoffverunreinigungen besteht, in einen Trägergasstrom eingebracht wird. Anschließend wird dieses Gemisch in einem Verdampfer bis zu einer Temperatur erhitzt, die oberhalb der Sättigungstemperatur des bei der Erhitzung entstehenden Wasserdampfes liegt. Aus diesem überhitzten Trägergas-Dampfgemisch werden die Feststoffpartikel in einem Abscheider abgeschieden. Vom Abscheider ausgehend wird das Trägergas zuerst mittels eines Verdichters komprimiert und anschließend zur Aufheizung des zu reinigenden Gemisches aus Trägergas und Abfallflüssigkeit durch den Verdampfer geleitet. Gleichzeitig kühlt sich im Verdampfer durch diese Wärmeübertragung auch das von den Verunreinigungen befreite Trägergas-Trockendampfgemisch ab. Dabei kondensiert die Basisflüssigkeit, die als heißes Kondensat einem Wärmetauscher zur Vorerwärmung der Abfallflüssigkeit zugeführt wird, während andererseits das Trägergas dem Verdampfereingang zugeführt wird, an dem eine Mischung von Trägergas und vorerwärmter Abfallflüssigkeit stattfindet.

Dieses Verfahren ist geeignet, um in einer Abfallflüssigkeit enthaltene, nicht verdampfbare Feststoffe und/oder Substanzen zu gewinnen, insbesondere um einen Reinheitsgrad des abziehenden Dampfes zu erreichen, der in etwa dem Reinheitsgrad destillierten Wassers entspricht. Es hat sich jedoch gezeigt, dass es vor allem bei einer Belastung einer Abfallflüssigkeit mit im wesentlichen flüssigen Verunreinigungen, wie z. B. ölhaltigen organischen Stoffen, zu Inkrustationen auf der Verdampferseite des Wärmetauschers kommen kann, die eine häufige Reinigung des Wärmetauschers erfordern. Ferner kommt es bei der Abscheidung sowie bei der Trennung von Trägergas und Kondensat im Verdampfer zu nicht unerheblichen Verlusten an Trägergas, was sich auf die Dauer nachteilig auf eine optimale Prozeßführung auswirkt.

Aus der DE 197 41 806 A1 ist weiter ein Verfahren mit dazugehöriger Vorrichtung zur Aufbereitung einer Abfallflüssigkeit, die aus einer Basisflüssigkeit und darin enthaltenen Verunreinigungen besteht, bekannt. Hier wird die zu reinigende Abfallflüssigkeit in einem Trägergasstrom verteilt, in einem Wärmetauscher vorgewärmt und anschließend werden in einem Abscheider die Verunreinigungen als Konzentrat ausgeschieden. Das Konzentrat wird in einem dem Konzentratabscheider nachgeschalteten Verdampfer mit Brüdenkompression bei Temperaturen bis 170°C nachgetrocknet, wobei das Brüdenkondensat in das überhitzte Trägergas-Dampfgemisch zurückgefördert und mit diesem gemischt wird. Das nach der Abscheidung der Verunreinigungen gereinigte Trägergas-Trockendampfgemisch wird anschließend in einem Verdichter komprimiert und zur Aufheizung des Gemisches aus vorerwärmter Abfallflüssigkeit und Trägergas einem Wärmetauscher zugeführt, wobei die Basisflüssigkeit als Kondensat kondensiert. Dieses Kondensat wird in einen als Stripper ausgebildeten Kondensatsammelbehälter geleitet und dort über eine Sprühdüse verdüst. Die hierbei frei werdenden, flüchtigen Bestandteile werden über eine Gasleitung durch in einem Flüssigkeitsbehälter vorhandenes, gekühltes Wasser geleitet, wobei die wasserlöslichen Bestandteile im Wasser gelöst werden, während das Restgas über eine Ausgangsleitung an die Umluft abgegeben wird. Das beim Verdüsen im Stripper anfallende Kondensat wird am Boden gesammelt und zu einem Wärmetauscher geleitet, in welchem die noch vorhandene Restwärme zur Vorerwärmung auf die zu reinigende Abfallflüssigkeit übertragen wird.

Nachteilig hierbei ist, dass das Trägergas kontinuierlich in das System eingespeist werden muss, weil über den als Stripper ausgebildeten Kondensatsammelbehälter sowie den nachgeschalteten Kühlwasserbehälter ein großer Teil des Trägergases direkt an die Umgebungsluft abgegeben wird.

Das ständige Einspeisen von frischem Trägergas in das System ist zum einen sehr teuer und verringert den Wirkungsgrad der gesamten Anlage erheblich. Aufgrund dieser großen Trägergasverluste können teure Inertgase mit einer derartigen Anlage nicht als Trägergase verwendet werden, da hier ansonsten die Betriebskosten unwirtschaftlich hoch werden würden. Eine derartige Anlage ist deshalb im praktischen Betrieb nur mit Frischluft als Trägergas in rentabler Weise zu fahren, was jedoch aufgrund der Reaktionsfähigkeit bestimmter Bestandteile der Luft mit bestimmten Bestandteilen mancher Abfallflüssigkeiten problematisch ist und dadurch ggf. das Abtrennen der in der Abfallflüssigkeit gelösten Verunreinigungen in unerwünschter Weise erschweren kann. So ist z. B. bei einer Nassoxidation der im Trägergas Luft vorhandene Sauerstoff einer Abnahme unterworfen, so dass durch eine Zufuhr von Luft Trägergas nachzusteuem ist. Dies bedeutet allerdings auch, dass ein erhöhter Trägergasaustrag über den Stripper erforderlich wird, um den erforderlichen Sauerstoffbedarf decken zu können. Da in diesem Fall die Wasservorlage in dem nachgeschalteten Kühlwasserbehälter ebenfalls einer erhöhten Belastung ausgesetzt ist, kommt es zu einem unerwünschten Austrag von dampfförmigen Trägergas-Inhaltsstoffen, die zu einer Umweltgefährdung führen.

Weiter ist das Restgas, das über eine Ausgangsleitung an die Umluft abgegeben wird, regelmäßig noch erheblich mit flüchtigen Kondensatsverunreinigungen behaftet, so dass es zu einer unerwünschten Umweltbelastung kommt.

Weiter können hier nachteilig nur bestimmte flüssige Verunreinigungen abgetrennt werden, so dass bei Aufbereitungsflüssigkeiten, die eine Vielzahl von eine unterschiedliche Siedetemperatur aufweisenden flüssigen Verunreinigungen sowie eine relativ große Menge von gasförmigen Verunreinigungen enthalten, die Gefahr besteht, dass ggf. ein erheblicher Anteil der flüssigen und/oder gasförmigen Verunreinigungen mit einer derartigen Verfahrensführung nicht beseitigt werden kann, so dass das erwünschte Behandlungsziel hier nicht erreicht wird. Denn je nach Aufbereitungsflüssigkeit verbleibt ein mehr oder weniger großer Teil der flüssigen Verunreinigungen nach der Kondensation weiterhin in der Basisflüssigkeit und verunreinigt diese, während die gasförmigen Verunreinigungen zusammen mit dem Trägergas in unerwünschter Weise, sofern diese nicht wasserlöslich sind, an die Umgebung abgegeben werden. Die Gefahr einer Umweltbelastung ist hier somit insgesamt sehr hoch.

Dieses Verfahren ist somit insgesamt lediglich zur Aufbereitung eines sehr engen Spektrums von Aufbereitungsflüssigkeiten geeignet, so dass für eine Vielzahl von Aufbereitungsflüssigkeiten andere Verfahren gewählt werden müssen. So ist dieses Verfahren insbesondere in nachteiliger Weise nicht zur Gewinnung von Trink- und Brauchwasser aus Meer- oder Brackwasser geeignet, da hier u.a. beim thermischen Zerfall von HCO₃ relativ große Mengen an CO₂ entstehen, die aus dem System entfernt werden müssen, was jedoch mit obigem Verfahren nicht möglich ist.

Durch die Erhitzung der Brüden im Konzentratverdampfer auf Temperaturen von bis zu 170°C wird ferner eine Verdampfung von Inhaltsstoffen des Konzentrats erreicht, die sich dann als Brüden niederschlagen und mit diesen in das Trägergas-Trockendampfgemisch eingespeist werden. Dadurch erfolgt eine unerwünschte sekundäre Kontamination des Trägergas-Trockendampfgemisches bei der Kondensation des Dampfes und somit eine unerwünschte Verschmutzung des Ablaufs.

Aus der gattungsgemäßen WO 01/03794 A1 ist ferner ein Verfahren und eine Vorrichtung zur Aufbereitung einer Abfallflüssigkeit bekannt, bei der die Abfallflüssigkeit aus einer Basisflüssigkeit mit darin enthaltenen flüssigen Verunreinigungen besteht. Zur Abtrennung der flüssigen Verunreinigungen wird hier ein Abfallflüssigkeit/Trägergas-Gemisch zu einem nassen Trägergas-Dampfgemisch verdampft dergestalt, dass die Basisflüssigkeit verdampft ist und die eine höhere Siedetemperatur als die Basisflüssigkeit aufweisenden Verunreinigungen als Restflüssigkeitsanteil verbleiben.

Anschließend wird dieses nasse Trägergas-Dampfgemisch einem Konzentratabscheider zugeführt, in dem der Restflüssigkeitsanteil als Konzentrat abgeschieden wird. Das vom Restflüssigkeitsanteil befreite Trägergas-Trockendampfgemisch wird komprimiert und anschließend abgekühlt, so dass die Basisflüssigkeit kondensiert und in einem nachgeordneten Kondensatabscheider abgeschieden werden kann.

Das am Kondensatabscheider separierte Trägergas wird in einem geschlossenen Kreislauf geführt dergestalt, dass ein erster Teilmassenstrom des am Kondensatabscheider separierten Trägergases direkt der Abfallflüssigkeit an einer Einmischvorrichtung wieder zugeführt wird, während ein weiterer, zweiter Teilmassenstrom des am Kondensatabscheider separierten Trägergases zum Trocknen über einen Gastrockner geführt und anschließend als getrocknetes Trägergas der Abfallflüssigkeit wieder in der Einmischvorrichtung zugeführt wird.

Bevor die Abfallflüssigkeit hier der Einmischvorrichtung zur Zumischung des Trägergases zugeführt wird, erfolgt eine zweistufige Vorerwärmung durch einen Kondensat/Abfallflüssigkeit-Wärmetauscher mit dem heißen aus dem Kondensatsammelbehälter kommenden Kondensat sowie durch einen Konzentrat/Abfallflüssigkeit-Wärmetauscher mit dem heißen aus dem Konzentratsammelbehälter kommenden Konzentrat.

Die Wärmezufuhr für die Verdampfung des Trägergas-Dampfgemisches zu dem nassen Trägergas-Dampfgemisch erfolgt über zwei Verdampfer/Kondensations-Wärmetauscher durch das vom Konzentratabscheider abströmende komprimierte und gereinigte Trägergas-Trockendampfgemisch, welches in diesem Verdampfer-Kondensations-Wärmetauscher durch die Wärmeabgabe zumindest teilweise kondensieren kann.

Mit einer derartigen Verfahrensführung und Vorrichtung zur Durchführung des Verfahrens wird erreicht, dass der Energieaufwand insgesamt erheblich reduziert werden kann, da nahezu alle heißen Ströme zur Erwärmung kälterer Ströme verwendet werden. Durch die zweistufige Vorerwärmung der Abfallflüssigkeit vor deren Zuführung zur Einmischvorrichtung kann zudem bereits eine solche Temperatur der Abfallflüssigkeit genau eingestellt werden, die nach der Zumischung von Trägergas eine Feinstverteilung der Abfallflüssigkeit im Trägergas durch eine nahezu spontane Verdampfung begünstigt.

Weiter können durch den geschlossenen Trägergaskreislauf zwischen dem Kondensatabscheider und der Trägergas-Einmischvorrichtung die Trägergasverluste erheblich minimiert werden.

Trotz dieser Vorteile können auch bei einer derartigen Verfahrensführung und Vorrichtung wieder nur bestimmte flüssige Verunreinigungen abgetrennt werden, so dass bei Aufbereitungsflüssigkeiten, die eine Vielzahl von eine unterschiedliche Siedetemperatur aufweisenden flüssigen Verunreinigungen sowie eine relativ große Menge von gasförmigen Verunreinigungen enthalten, die Gefahr besteht, dass ggf. ein erheblicher Anteil der flüssigen und/oder gasförmigen Verunreinigungen mit diesem Verfahren nicht beseitigt werden kann, so dass diese die Basisflüssigkeit, in der Regel Wasser, auch nach der Behandlung weiterhin kontaminieren. Aufgrund des geschlossenen Trägergaskreislaufes reichern sich die gasförmigen Verunreinigungen zudem hier in unerwünschter Weise im Trägergaskreislauf an, was insbesondere dann der Fall ist, wenn Meer- oder Brackwasser zur Gewinnung von Trink- und/oder Brauchwasser behandelt werden soll, da hier eine große Menge von CO₂ entsteht, unter anderem beim thermischen Zerfall von HCO₃. In einem solchen Fall muss dann die Anlage regelmäßig gestoppt werden und aufgrund des geschlossenen Trägergaskreislaufes das Trägergas von den sich im Gaskreislauf anreichemden gasförmigen Verunreinigungen gereinigt werden. Dies ist unwirtschaftlich und verringert den Wirkungsgrad der Anlage. Zudem erfordert eine derartige Anreicherung für eine längere Laufzeit der Anlage eine entsprechend größere Auslegung und Dimensionierung der Rohrleitungen und der Apparate, was ebenfalls wiederum teuer ist. Auch dieses Aufbereitungsverfahren ist somit nur für ein bestimmtes, relativ enges Spektrum von Aufbereitungsflüssigkeiten geeignet.

Weiter sind z. B. aus der WO 87/07847 und der WO 98/31445 herkömmliche Destillationsverfahren ohne die Verwendung von Trägergas als Schleppgas bekannt und betreffen somit eine grundsätzlich andere Art der Verfahrensführung als dies bei Verfahrensführungen mit Trägergas der Fall ist, wobei bei der WO 87/07847 eine Wasserreinigung oder Wasserentsalzung mittels einer Vakuumdestillation durchgeführt wird und bei der WO 98/31445 ein Fouling der Anlage selbst vermieden werden soll.

Aufgabe der Erfindung ist es daher, ein gattungsgemäßes Verfahren und eine grattungsgemäße Vorrichtung zur Aufbereitung von Flüssigkeiten so weiterzuentwickein, dass mit diesein bzw. mit dieser eine effektive und wirtschaftliche Aufbereitung von Aufbereitungsflüsssigkeiten, die eine Vielzahl von eine unterschiedliche Siedetemperatur aufwelsenden flüssigen Verunreinigungen und/oder eine relativ große Menge von gasförmigen Verunreinigungen enthalten, insbesondere von Meer-und/oder Brackwasser und/oder einer Abfallflüssigkeit und/oder Abwasser, unter Einsatz eines im Kreislauf geführten Trägergases als Schieppgas so durchführbar ist, dass eine Anreicherung von insbesondere gasförmlgen Verunreinigungen im Trägergas und damit unerwünschte Stillstandzeiten der Anlage verhindert werden können.

Diese Aufgabe wird bezüglich des Verfahrens mit den Merkmalen. des Anspruchs 1 und bezüglich der Vorrichtung mit den Merkmalen des Anspruchs 15 gelöst.

Weitere vorteilhafte Ausgestaltungen der Erfindung sind Gegenstand der Unteransprüche.

Erfindungsgemäß ist vorgesehen, dass die Aufbereitungsflüssigkeit vor der Zumischung von in einem geschlossenen Trägeirgaskreisiauf geführtem Trägergas zur Vorervvärmung und Vorreinigung wenigstens einer Vorerwärmungs/Abscheldeeinrichtung zugeführt wird, die jeweils wenigstens einen Vorerwärmungs-Wärmetauscher und eine dem Vorerwärmungs Wärmetauscher nachgeschaltete Abscheideeinrichtung aufweist. In dieser wird die Aufbereltungsflüssigkeit durch den Vorerwärmungs-Wärmetauscher auf eine Temperatur unterhalb der Siedetemperatur der Basisflüssigkeit vorerwärmt, so dass die bezüglich der Basisflüssigkeit niedersiedenden flüssigen Verunreinigungen verdampfen und/oder die gasförmigen Verunreinigungen thermisch ausgetrieben werden, wobei die verdampften und/oder ausgetriebenen Verunreinigungen in der Abscheideeinrichtung der wenigstens einen Vorerwärmungs/Abscheideeinrichtung abgeschieden werden.

Vorteilhaft werden daher bereits vor der Zuführung der Aufbereitungsfiüssigkeit zu einer Trägergas-Einmischvorrichtung diejenigen niedersiedenden flüssigen Verunreinigungen und/oder gasförmigen Verunreinigungen abgetrennt, die nach der Zuführung von dem Trägergas nicht mehr abgeschieden werden können. Bisher sind bei allen vorbekannten Lösungen des Standes der Technik diese Bestandteile als Restverunreinigung in der Basisflüssigkeit verblieben, da bei einem Verfahren mit Trägergas als Schleppgas nach der Zuführung von Trägergas und der Verdampfung der Basisflüssigkeit lediglich diejenigen flüssigen Verunreinigungen als Restflüssigkeitsanteil abgeschieden werden können, deren Siedetemperaturen oberhalb derjenigen der Basisflüssigkeit liegen. Durch das hier vor der Zuführung des Trägergases erfolgende Austreiben von gasförmigen Verunreinigungen aus der Aufbereitungsfiüssigkeit wird erreicht, dass sich diese gasförmigen Verunreinigungen nicht im geschlossenen Trägergaskreislauf anreichern können. Vorteilhaft werden dadurch Stillstandszeiten der Anlage vermieden, um die gasförmigen Verunreinigungen vom Trägergas abzutrennen, so dass insgesamt ein wirtschaftliches Betreiben einer erfindungsgemäßen Anlage mit langen Laufzeiten sehr gut möglich ist. Zudem können dadurch auch im Gegensatz zu herkömmlichen Anlagen die Rohrleitungen und Apparate insgesamt entsprechend geringer und damit preiswerter dimensioniert und ausgelegt werden. Dies nicht zuletzt auch deswegen, weil durch das Abziehen der niedersiedenden flüssigen Verunreinigungen vor der Zuführung von Trägergas bereits ein Teil der Aufbereitungsflüssigkeit als Verunreinigungen abgezogen worden ist.

Vorteilhaft findet bei einer derartigen erfindungsgemäßen Verfahrensführung und Vorrichtung, bei der einer aufzubereitenden Aufbereitungsflüssigkeit ein Trägergas als Schleppgas zugeführt wird, somit eine nach der Siedepunkttemperatur der flüssigen Verunreinigungen fraktionierte Abtrennung der flüssigen Verunreinigungen und/oder eine Austreibung der gasförmigen Verunreinigungen von der dadurch für eine umweltfreundliche Entsorgung oder Wiederverwertung aufbereiteten Basisflüssigkeit statt. Die Verunreinigungen können dabei durchaus auch Wertstoff sein, die wiederverwertet werden Können und nicht entsorgt werden müssen.

Mit der erfindungsgemäßen Vorrichtung und Verfahrensführung wird daher eine vollständige Abtrennung nahezu aller flüssigen und gasförmigen Verunreinigungen in der Aufbereitungsflüssigkeit erzielt, so dass der Wirkungsgrad der gesamten Anlage hierdurch sehr hoch ist und ein insgesamt äußerst wirtschaftlicher-Betrieb der Anlage möglich ist.

Insbesondere kann mit einem derartigen Verfahren und einer derartigen Vorrichtung ein sehr breites Spektrum unterschiedlichster Aufbereitungsflüssigkeiten mit einer Vielzahl von unterschiedlichsten flüssigen und/oder gasförmigen Verunreinigungen auf effektive und wirtschaftliche Weise aufbereitet werden. So ist eine derartige Verfahrensführung und Vorrichtung insbesondere auch für die Wassergewinnung, z. B. in Form von Trinkwasser oder Brauchwasser aus Meer- und/oder Brackwasser, besonders gut geeignet und vorteilhaft, da im Rahmen der Vorerwärmung und Vorreinigung das darin in großen Mengen gelöste CO₂ sowie das bei dem thermischen Zerfall von HCO₃ entstehende CO₂ abgeschieden und entfernt werden kann. Die in der Basisflüssigkeit vorhandenen Salze können dann im Rahmen der Verdampfung der Basisflüssigkeit als Salzsole im Konzentratabscheider abgeschieden werden.

Ein besonders vorteilhafter Wirkungsgrad der Anlage wird erreicht, wenn die zu behandelnde Aufbereitungsflüssigkeit nacheinander wenigstens zwei hintereinander geschalteten Vorerwärmungs-Abscheideeinrichtungen zugeführt wird. Mit einer derartigen mehrstufigen Vorerwärmung und Vorreinigung wird eine besonders gute und effiziente Trennwirkung hinsichtlich der Abtrennung der niedersiedenden flüssigen Verunreinigungen und/oder der Austreibung der gasförmigen Verunreinigungen erzielt Für eine derartige erhöhte Trennwirkung läßt sich ein besonders hoher Wirkungsgrad der Anlage insgesamt sowie insbesondere hinsichtlich der Vorerwärmung und Vorreinigung erreichen. Dies kann insbesondere auch dann erreicht werden, wenn die Aufbereitungsftüssigkeit im Vorerwärmungs-Wärmetauscher derjenigen Vorerwärmungs-Abscheideeinrichtung, nach der der Aufbereitungsflüssigkeit in einer Einmischvorrichtung das Trägergas zugeführt wird, bis möglichst nahe an die Verdampfungstemperatur der Basisfiüssigkeit vorerwärmt wird, da hierdurch eine anschließende Feinstverteilung der vorerwärmten und vorgereinigten-Arrfbereitangsftüssigkeit in dem Trägergas begünstigt wird.

Gemäß einer besonders bevorzugten Ausführungsform und Verfahrensführung ist vorgesehen, dass die im wenigstens einen Vorerwärmungs-Wärmetauscher jeder Vorerwärmungs-Abscheideeinrichtung vorgewärmte zu behandelnde Aufbereitungsflüssigkeit einer Entspannungsvorrichtung als Bestandteil der Abscheideeinrichtung zugeführt wird, mit der eine effektive Abscheidung der niedersiedenden dampfförmigen Verunreinigungen und/oder gasförmigen Verunreinigungen erfolgt. Besonders vorteilhaft können dabei die niedersiedenden dampfförmigen Verunreinigungen und/oder die gasförmigen Verunreinigungen von der Entspannungsvorrichtung ausgehend über eine Leitung einer Kühlvorrichtung mit Wärmetauscher als weiterem Bestandteil der Abscheideeinrichtung zugeführt und in einem Sammelbehälter gespeichert werden, so dass beim Kühlvorgang ein Unterdruck in der Leitung erzeugt wird, durch den die abgeschiedenen Verunreinigungen aus der Entspannungsvorrichtung gesaugt werden. Vorteilhaft wird dadurch erreicht, dass die Abtrennung und Abscheidung der Verunreinigungen auf einfache Weise ohne großen Bauteil- und Apparateaufwand erzielt wird. Die Entspannungsvorrichtung kann dabei durch einen Entspannungsbehälter mit vorgeschalteter Pumpe oder durch eine Pervaporationsmembrananlage gebildet sein.

Eine besonders vorteilhafte Verfahrensführung wird erreicht, wenn jeder Vorerwärmungs-Wärmetauscher durch einen Kondensat-Aufbereitungsflüssigkeit-Wärmetauscher gebildet ist, mit dem eine Vorerwärmung durch das heiße aus dem Kondensatbehälter kommende Kondensat erfolgt. Zusätzlich dazu kann eine weitere Wärmezufuhr für die Vorerwärmung der Aufbereitungsflüssigkeit in einem Konzentrat-Aufbereitungsflüssigkeits-Wärmetauscher durch das heiße aus dem Konzentratsammelbehälter kommende Konzentrat erfolgen, wobei der Konzentrat/Abfallflüssigkeits-Wärmetauscher der wenigstens einen Vorerwärmungs/Abscheideeinrichtung vorgeschaltet ist. Mit einer derartigen Verfahrensführung kann der Energieaufwand insgesamt erheblich reduziert werden, da nahezu alle heißen Ströme zur Erwärmung kälterer Ströme verwendet werden.

Dies gilt insbesondere auch dann, wenn zumindest ein Teil der Wärmezufuhr für die Verdampfung zu dem nassen Trägergas-Dampfgemisch in wenigstens einem Verdampfer/Kondensations-Wärmetauscher durch das abströmende, komprimierte. und gereinigte Trägergas-Trockendampfgemisch erfolgt.

Weiter ist vorgesehen, dass das Trägergas zwischen einem Kondensatabscheider und einer Trägergas-Einmischvorrichtung in einem separaten Trägergaskreislauf geführt und einer Trägergaszuführleitung mittelbar und/oder unmittelbar zuführbar ist, um die Trägergasverluste zu minimieren. Dadurch kann erreicht werden, dass das Trägergas je nach Erfordernis in Abhängigkeit von den Prozessparametem entweder unmittelbar direkt zur Trägergaszuführleitung und zusätzlich oder alternativ auch im Trägergaskreislauf mit Gastrocknung und Gasrückgewinnung zur Trägergaszuführleitung geführt werden kann. Dies erhöht die Flexibilität bei der Verfahrensführung erheblich, so dass eine einfache Anpassung der Verfahrensführung an z. B. unterschiedliche zu reinigende Aufbereitungsflüssigkeiten möglich ist. Deshalb können bei einem derartigen geschlossenen Trägergaskreislauf aufgrund der geringen Trägergasverluste auch relativ teure und wertvolle Inertgase als Trägergase verwendet werden, die in ihrer Funktion als Schleppgas für die Abfallflüssigkeiten gegenüber z. B. Luft regelmäßig bevorzugt sind, da diese anders als z. B. Luft nicht mit bestimmten anderen Komponenten, insbesondere gasförmigen Komponenten der Abfallflüssigkeiten, reagieren können.

Vorzugsweise ist hierzu im Trägergaskreislauf ein Gastrockner zur Trocknung von Trägergas angeordnet. Beispielsweise ist ein derartiger Gastrockner hinter einen Kondensatsammelbehälter geschalten, um nasses Restträgergas aus dem Kondensatsammelbehälter zu trocknen und dem Trägergaskreislauf im erwünschten trockenen Zustand zuzuführen.

In einer bevorzugten konkreten Verfahrensführung und Ausführungsform der Vorrichtung ist vom Kondensatabscheider ausgehend über einen Kondensatsammelbehälter wenigstens eine Gasleitung unter Zwischenschaltung eines Gastrockners in einem Kreislauf zur Trägergaszuführleitung zurückgeführt, wobei vorzugsweise auch ein Verdichter vorgesehen ist. Mit einem derartigen Trägergaskreislauf wird erreicht, dass die Verluste von Trägergas in der Vorrichtung so gering wie möglich gehalten werden, da beispielsweise auch das in dem Kondensat noch vorhandene Trägergas wiedergewonnen und im Kreislauf zur Trägergaszuführleitung geführt wird. Damit ist insgesamt ein äußerst wirtschaftlicher Betrieb der Anlage möglich.

Für den Fall, dass z. B. nach längerer Betriebszeit dennoch Verluste von Trägergas im System auftreten, kann ferner auf einfache Weise Trägergas über einen mit dem Trägergaskreislauf gekoppelten Trägergasspeicher gefüllt werden. Die Zuführung erfolgt dabei durch einfache Einkopplung in den ohnehin vorhandenen Trägerkreislauf, so dass die Anlage hierfür nicht gestoppt zu werden braucht, was unwirtschaftlich ist, sondern kontinuierlich weiterbetrieben werden kann.

Ferner kann in diesen Trägergaskreislauf auf einfache Weise auch ein Sauerstoffbehälter mit einem Sauerstoffverdampfer für eine Nassoxidation integriert werden, der bei Bedarf zugeschalten wird.

Weiter kann vorgesehen sein, dass ein weiterer zweiter Kondensatabscheider als Notfall/Entlastungs-Kondensatabscheider vorgesehen ist, dem über die Umgehungsleitung bei ggf. gesperrten oder reduzierten Hauptleitungen Trägergas-Trockendampfgemisch und/oder Brüden zugeführt wird. Damit ist bei einer Überlastung des ersten Kondensatabscheiders einerseits die Betriebssicherheit und andererseits auch die Weiterführung des Prozesses mit den erwünschten Betriebsergebnissen gewährleistet. Ein derartiger Notfall/Entlastungs-Kondensatabscheider kann zudem auf einfache Weise in das System integriert werden, wobei insbesondere auch eine direkte Einspeisung von Trägergas in eine Trägergaszuiührleitung zur Einmischvorrichtung bzw. in einen Trägergaskreislauf mit ggf. nachfolgender Trocknung in einem Gastrockner erfolgen kann. Damit wird die Flexibilität einer Anlage insgesamt so erhöht, dass schnell auf bestimmte Betriebszustände reagiert und ein optimaler Prozess gefahren werden kann.

Bevorzugt ist ferner wenigstens ein Teilbereich der Zuführleitung vom Konzentratabscheider zum Kondensatabscheider als Trägergas-Trockendampfgemisch-Druckleitung mit vorgeschaltetem Verdichter zur Druck- und Temperaturerhöhung des Trägergas-Trockendampfgemisches ausgebildet. Dabei ist in der Druckleitung zur Betriebsüberwachung wenigstens eine Messvorrichtung, vorzugsweise wenigstens eine Durchffussmessvorrichtung und/oder wenigstens eine Temperaturmessvorrichtung und/oder wenigstens eine Druckmessvorrichtung angeordnet, die Bestandteil eines Regelkreises sind.

Im Falle einer nicht ausreichenden Kompressionswärme, was insbesondere im Anfahrbetrieb der Fall sein kann, ist die Druckleitung vorzugsweise mit einem Wärmeerzeuger ggf. über einen Wärmetauscher gekoppeit, der automatisiert zu- und/oder abgeschalten werden kann. Im Falle des Einsatzes von zwei Verdampfer/Kondensations-Wärmetauschern sind diese entweder als Einzeiaggregat oder' als Gesamtaggregat schaltbar.

Jede der Systemkomponenten kann mittels einer Regelung entsprechend den eingestellten und gewünschten Vorgaben geregelt werden. Dazu ist prozessleitungsseitig wenigstens ein Stellglied, vorzugsweise wenigstens ein Regelventil und wenigstens eine Messvorrichtung, vorzugsweise eine Temperaturmessvorrichtung und/oder Druckmessvorrichtung und/oder Druckflussmessung vorgesehen, die jeweils mit einem Regler gekoppelt sind. Damit ist eine optimale Prozessführung in Abhängigkeit von den zu reinigenden Flüssigkeiten und deren Komponenten möglich.

Für eine hohe Betriebssicherheit der Anlage ist ferner eine Abschlämmvorrichtung vorgesehen, mit der insbesondere der oder die Verdampfer/Kondensations-Wärmetauscher durch Kondensat, z. B. aus einem Entgasungsbehälter, abgeschlämmt werden können.

Für eine umweltfreundliche Notentlastung kann ferner ein Abluftfilter vorgesehen sein, über den die Entlastung in den betriebsdruckfreien Raum erfolgt.

Anhand von Zeichnungen wird die Erfindung näher erläutert.

Es zeigen:
- Fig. 1: ein schematisches Fließbild einer Vorrichtung zur Aufbereitung einer zu behandelnden Aufbereitungsflüssigkeit gemäß einer ersten Verfahrensführung, und
- Fig. 2: ein schematisches Fließbild einer Vorrichtung zur Aufbereitung einer zu behandelnden Aufbereitungsflüssigkeit mit einer alternativen Verfahrensführung im Bereich der Vorerwärmung und Vorreinigung.

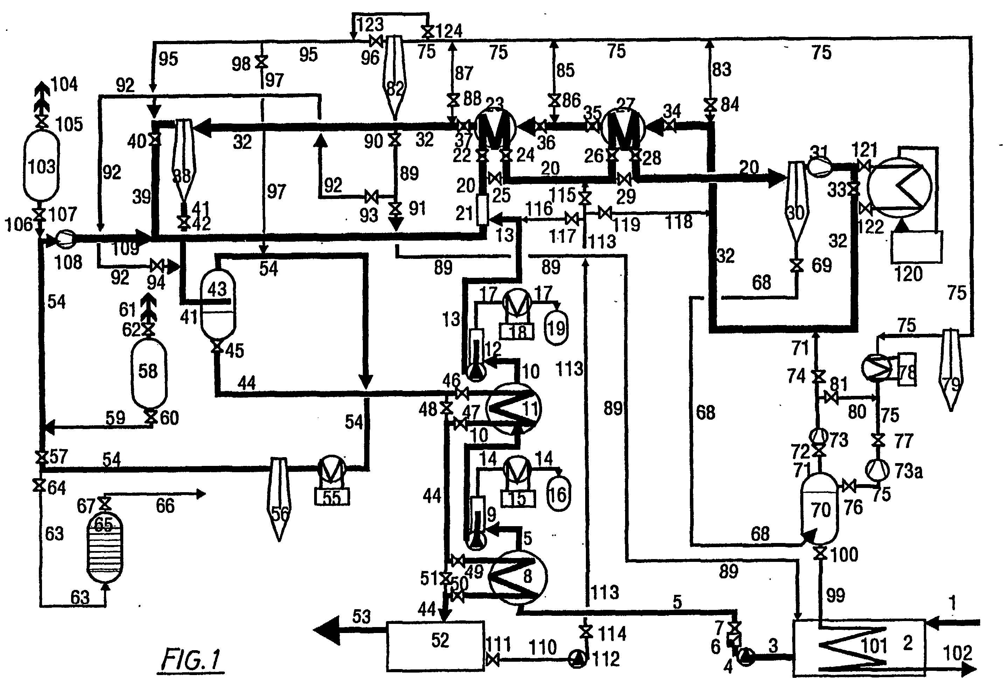

Aufbereitungsflüssigkeiten, wie z. B. in der Produktion anfallende Abfallflüssigkeiten, z. B. Lösungsmittel in unterschiedlichen Verdünnungen, oder Meer- und/oder Brackwasser, werden, in einer Verfahrensführung nach Fig. 1, ggf. vorgereinigt über den Zulauf 1 in einen Pumpensumpf 2 eingeleitet. Im Pumpensumpf 2 ist ein Konzentrat/Flüssigkeit-Wärmetauscher 101 angeordnet, durch den eine Vorerwärmung der Flüssigkeit erfolgt. Diese Vorerwärmung wird mittels einer nicht dargestellten Temperaturmessvorrichtung gemessen.

Anschließend wird die so vorerwärmte Aufbereitungsflüssigkeit über eine Pumpe 4 zur Vorerwärmung und Vorreinigung einer ersten Vorerwärmungs/Abscheideeinrichtung 5, 8, 9, 14, 15, 16 zugeführt, die einen Vorerwärmungs-Wärmetauscher 8 und eine dem Vorerwärmungs-Wärmetauscher 8 nachgeschaltete Abscheideeinrichtung 9, 14, 15, 16 aufweist. Der Vorerwärmungs-Wärmetauscher 8 ist hier gleichzeitig als Kondensat/Aufbereitungsflüssigkeit-Wärmetauscher ausgebildet, in dem die Temperatur der zu reinigenden Aufbereitungsflüssigkeit abhängig vom vorhandenen Druck möglichst nahe an eine gewünschte Verdampfungstemperatur erwärmt wird.

Zur Vermeidung von Trockenlauf der Pumpe ist im Pumpensumpf 2 eine nicht dargestellte Fültstandsmessvorrichtung vorgesehen. Mit dieser Füllstandsmessvorrichtung wird erreicht, dass der Konzentrat/Abfallflüssigkeit-Wärmetauscher 101 immer von Flüssigkeit überdeckt ist und die Pumpe 4 mit einem ausreichenden Vordruck beschickt werden kann. Dieser Vordruck ist variabel und von der Temperatur der zu fördernden Abfallflüssigkeit abhängig. Der Minimalschaltpunkt der Füllstandsmessvorrichtung wird mittels einer Verknüpfung mit der Temperaturmessvorrichtung kontinuierlich angepasst.

Der Zulauf zur Pumpe 4 erfolgt über eine Zulauf/Saugleitung 3 aus dem Pumpensumpf 2, wobei die Aufbereitungsflüssigkeit, z. B. eine Abfallflüssigkeit, über eine Druckleitung 5, in die eine Rückschlagklappe 6 und ein Absperrschieber 7 integriert ist, sowie über den Kondensat/Abfallflüssigkeit- als Vorerwärmungs-Wärmetauscher 8 zu einer Bestandteil der Abscheideeinrichtung 9, 14, 15, 16 bildenden Entspannungsvorrichtung 9 bestehend aus einem Entspannungsbehälter mit einer Pumpe, gefördert wird. Dort erfolgt eine Abscheidung des entsprechend seiner Siedepunkttemperatur entstandenen Dampfes und/oder der z. B. in dem Meer- und/oder Brackwasser vorhandenen Inertgase beziehungsweise des vorhandenen und entstandenen gasförmigen CO₂ aus der vorerwärmten Flüssigkeit. Der abgeschiedene Dampf und/oder Gas werden über eine Leitung 14 einer Kühlvorrichtung mit Wärmetauscher 15 zugeführt und in verflüssigter Form in einem Sammelbehälter 16 gespeichert. Bei dem Kühlvorgang entsteht in der Leitung 14 ein Unterdruck durch den die Ableitung des anfallenden Dampfes aus der Entspannungsvorrichtung 9 bewirkt wird. Sind verdampfbare nicht azeotrope Flüssigkeiten mit unterschiedlichen Siedepunkttemperaturen in der zu behandelnden Abfallflüssigkeit vorhanden, so kann durch eine aufeinanderfolgende Mehrfachanordnung von Vorerwärmungsgas/Abscheideeinrichtungen, hier beispielsweise einer weiteren Vorerwärmungs/Abscheideeinrichtung 10, 11, 12, 17, 18, 19 in Verbindung mit einer Verfahrensführung, bei der einer Aufbereitungsflüssigkeit ein Trägergas als Schleppgas zugeführt wird, eine mehrstufige fraktionierte Abscheidung von niedrigsiedenden flüssigen Verunreinigungen und/oder gasförmigen Verunreinigungen, z. B. in Form von Inhalts- und/oder Wertstoffen aus der Aufbereitungsflüssigkeit, durchgeführt werden.

In der Einmischvorrichtung 21, die verbunden ist mit einer Trägergas-/Treibgaszufuhrteitung 39 und einer Trägergas-Nassdampfleitung 20, wird die durch die mehrstufige Vorerwärmung auf die optimale Temperatur vorerwärmte und vorgereinigte Aufbereitungsflüssigkeit im Trägergasstrom feinstverteilt, so dass eine spontane Verdampfung möglich ist. Dieses dadurch sich ergebende nasse Trägergas-Dampfgemisch gelangt über die Gemischleitung 20 in einen Verdampfer/Kondensations-Wärmetauscher 23, in dem eine weitere Erwärmung mit dem Ziel einer überhitzung des Trägergas-Dampfgemisches erfolgt. Ggf. kann hier mittels einem weiteren Verdampfer/Kondensations-Wärmetauscher 27 eine Nachheizung erfolgen. Dieser Verdampfer/Kondensations-Wärmetauscher 23 wird durch das Öffnen oder Schließen der Ventile 22, 24 und 25 zu- oder abgeschaltet. Die gleiche Schaltung ist für den Verdampfer/Kondensations-Wärmetauscher 27 durch das Öffnen und/oder Schließen der Ventile 26, 28 und 29 möglich. Die erforderlichen Temperaturen und Betriebsdrücke des Trägergas-Dampfgemisches sind dabei von den abzuscheidenden Inhaltsstoffen und den thermischen Größen der zu reinigenden Abfallflüssigkeit abhängig. Daher können Temperaturen zwischen 50°C und 250°C sowie Betriebsdrücke zwischen 0,5 bar und 20 bar erforderlich werden.

Das nasse Trägergas-Dampfgemisch mit dem bezüglich der Basisflüssigkeit höhersiedenden flüssigen Rest bzw. den in der Basisflüssigkeit enthaltenen Salzen der zu reinigenden Aufbereitungsflüssigkeit wird anschließend in einen Konzentratabscheider 30 eingeleitet, indem dieser flüssige Rest und/oder eine Salzsole als Konzentrat abgeschieden wird. Dabei kann dieser Konzentratabscheider 30 beispielsweise als Zyklon oder Prallpiattenabscheider ausgebildet sein. Im Falle des Prallplattenabscheiders sind sowohl Einplatten- als auch Mehrplattenabscheider einsetzbar.

Das nunmehr keine Restflüssigkeit mehr enthaltene Trägergas-Trockendampfgemisch verläßt über eine Leitung 32 den Konzentratabscheider 30 und wird mittels eines Verdichters 31 unter gleichzeitiger Temperaturerhöhung auf den für ein Trägergas-Trockendampfgemisch optimierten Betriebsdruck eingestellt. Dieses Trägergas-Trockendampfgemisch gelangt über eine Druckleitung 32 zu den Verdampfer/Kondensations-Wärmetauscher 27, 23 und wird dort unter Kondensation des Trockendampfes des Trägergas-Trockendampfgemisches, nämlich der Basisflüssigkeit der Aufbereitungsflüssigkeit, abgekühlt wobei gleichzeitig eine Erhitzung des nassen Trägergas-Dampfgemisches, das von der Einmischvorrichtung 21 zu dem Konzentratabscheider 30 strömt, erfolgt

Das Kondensat wird anschließend in einem Kondensatabscheider 38 abgeschieden. Als Kondensatabscheider 38 kommen hier ebenfalls z. B. ein Zyklon oder ein Prallplattenabscheider, z. B. ein Einplatten- oder Mehrplattenabscheider, zum Einsatz

Das im Kondensatabscheider 38 vom Kondensat befeite Trägergas kann in einer ersten Verfahrensführung über die Trägergasleitung 39, in die eine Absperrvorrichtung 40 integriert ist, zu der Einmischvorrichtung 21 direkt zurückgeführt werden. Als Trägergas kommen bei spielsweise alle in den jeweiligen Flüssigkeiten nicht oder nur schwer löslichen Gase zur Anwendung.

Das im Kondensatabscheider 38 anfallende Kondensat wird Ober eine Kondensatablaufleitung 41 mit einer Absperrvorrichtung 42 in einen Kondensatsammelbehälter 43 abgeleit, wobei über eine Füllstandsmessung in Verbindung mit einem Regeiventil 42 ein möglichst trägergasverlustfreier Ablauf erzielt wird. Der Kopfprodukt des Kondensat-Sammelbehälters 43. das ebenfalls Trägergasbestandteile aufweist, wird einer kopfseitig an den Kondensat-Sammelbehälter 43 angeschlossenen Abgasleitung 54 zugeführt und anschließend über einen Gastrockner 55 mit nachgeschaltetem Kondensatabscheider 56 zur Trägergastrocknung sowie über die Gasleitung 109 in einem weiteren Trägergaskreislauf ebenfalls wiederum der Trägergaszuführleitung 39 zugeführt. In diesem Trägergaskreislauf ist ferner ein Verdichter 108 vorgesehen.

Aus dem Kondensatsammelbehälter 43 wird das Kondensat über die die Vorerwärmungs-Wärmetauscher der Vorerwärmungs/Abscheideeinrichtung bildenden Kondensat/Abfallflüssigkeit-Wärmetauscher 1.1 und 8 unter Abbau des vorhandenen Betriebsdruckes mittels einer Ablaufleitung 44 in einen Entgasungsbehälter 52 geleitet. Beim Durchlauf des Kondensats durch die Kondensat/Abfallflüssigkeit-Wärmetauscher 8, 11 findet in der zuvor beschriebenen Art und Weise eine Wärmeübertragung auf die der Einmischvorrichtung 21 über die Druckleitung 5, 10 und 13 zugeführte Aufbereitungsflüssigkeit zu deren Vorerwärmung und zur Abtrennung von gasförmigen und/oder niedersiedenden Verunreinigungen statt.

Der Entgasungsbehälter 52 dient dazu, die im Kondensat unter vorherrschenden Betriebsdruckbedingungen gelösten gasförmigen Stoffe nach der Entspannung zu entfernen. Anschließend kann dann das Kondensat über den Kondensatablauf 53 abfließen.

Mittels der Ventile 25 und 29 in der Gemischleitung 20 kann entsprechend auf die Verdampfer/Kondensations-Wärmetauscher 23, 27 als Einzelaggregat oder als Gesamtaggregat umgeschaltet werden. Dazu ist es erforderlich, dass das Trägergas-Trockendampfgemisch der Druckleitung 32 entsprechend der erforderlichen Schaltung über Umgehungsleitungen 83, 85 oder 87 und der Umgehungsleitung 75 geleitet wird. Zur Einstellung dienen hier die Regelventile 34, 35, 36 und 37 in der Druckleitung 32 und die Regelventile 84, 86 und 88 in den Umgehungsleitungen 83, 85, 87 und 75.

Der Umgehungsleitung 75 kann zur Entlastung des Kondensatabscheiders 38 ein zusätzlicher, zweiter Kondensatabscheider als Notfall/Entlastungs-Kondensatabscheider 82 zugeschaltet werden. Das in dem Notfall/Enttastungs-Kondensatabscheider 82 anfallende Kondensat wird über Kondensatleitungen 89, 92 in die Kondensatablaufleitung 41 des ersten Kondensatabscheiders 38 geleitet und anschließend dem Kondensatsammelbehälter 43 zugeführt. Das am Notfall/Entlastungs-Kondensatabscheider 82 abgeschiedene kondensatfreie Trägergas kann über eine Leitung 95 entweder direkt in die Trägergaszuführleitung 39 eingespeist werden oder entsprechend der jeweils gegebenen Prozessbedingungen mittels der Leitung 97 der an den Kondensatsammelbehälter 43 angeschlossenen Abgasleitung 54 zugeführt werden und anschließend über den Gastrockner 55 mit nachgeschaltetem Kondensatabscheider 56 zur Trägergastrocknung sowie Ober die Gasleitung 109 in einem weiteren Trägergaskreislauf ebenfalls wiederum der Trägergaszuführleitung 39 zugeführt werden.

Wie dem Fließbild der Fig. 1 weiter zu entnehmen ist, kann in den Trägergaskreislauf ferner ein Trägergasspeicherbehälter 103 eingeschalten werden, um einen Verlust von Trägergas während des Betriebs der Anlage auszugleichen. Dieser Trägergasausgleich erfolgt ggf. unter Nutzung einer hier nicht dargestellten Verdampfers über eine Gasleitung 106, in der ein Regelventil 107 angeordnet ist, wobei das Ausgleichsträgergas in die Gasleitung 54 vor einem Ansaugstutzen der Trägergasverdichters 108 zugeführt wird. Der Trägergasspeicherbehälter 103 selbst ist durch eine Abiassvorrichtung gesichert, die ein Ablassrohr 104 und ein Ahlassventil 105 aufweist.

Ferner ist für eine Notentlastung ein Abluftfilter 65 vorgesehen, wobei die Entlastung ausgehend von der Druckleitung 32 über einen ersten Leitungsverbund 75, 83, 85, 87 und den Notfall/Entlastungs-Kondensatabscheider 82 sowie einen zweiten Leitungsverbund 95, 97, 54, 63, 66 und den Ventilen 64 und 67 sowie den Abluftfilter 65 selbst in den betriebsdruckfreien Raum erfolgt. Das im Notfall/Entlastungs-Kondensatabscheider 82 in diesem Fall anfallende Kondensat wird über die Leitung 89 bei geöffneten Regelventilen 90, 91 in den Pumpensumpf 2 zurückgeführt.

Um im Falle einer Nassoxidation die erforderlichen Sauerstoffmengen zur Verfügung zu stellen, ist ferner ein Sauerstoffbehälter mit Sauerstoffverdampfer 58 vorgesehen, der über eine Sauerstoffleitung 59 mit einem Regelventil 60 an die Gasleitung 54 des Trägergaskreislaufes und damit an den Trägergasverdichter 108 angeschlossen werden kann. Die Sauerstoffzufuhr wird dabei über eine in der Druckleitung 32 des Trägergas-Trockendampfgemisch-Kreislaufs angeordnete, nicht dargestellte, Sauerstoffmessvorrichtung gesteuert. Zur Drucksicherung am Sauerstoffbehälter mit Sauerstoffverdampfer 58 ist eine Druckentlastungsleitung 61 mit einem Entlastungsventil 62 vorgesehen, das von einer am Sauerstoffbehälter 58 angeordneten Druckmessvorrichtung geschaltet wird.

Das im Konzentratabscheider 30 anfallende Konzentrat wird über eine Konzentratablaufleitung 68 einem Konzentratsammelbehälter 70 zugeführt. Dabei wird über ein Regelventil 69 eine trägergasfreie Ableitung des Konzentrats sichergestellt. Die Einleitung des Konzentrats in den Konzentratsammelbehälter 70 erfolgt unterhalb des minimalen Konzentratspiegels, so dass ein Brüdenniederschlag erfolgen kann.

Im Falle einer Brüdenbildung können die Brüden mittels eines Brüdenverdichters 73/73a über die Leitungen 71, 80 und 75 mit den Ventilen 72, 74, 76 und 81 ggf. über eine besonders vorteilhafte und bevorzugte Brüden-Kondensations-Vorrichtung, bestehend aus einer Kühlvorrichtung 78 mit Kondensatsammelbehälter 79, oder in den Notfall/Entlastungs-Kondensatabscheider 82 niedergeschlagen werden und dann über die Kondensatleitung 89 in den Pumpensumpf 2 zurückgeführt werden.

Die Steuerung der Brüdenverdichters 73/73a und der entsprechenden Regelventile 72, 74, 76, 81 erfolgt über eine, nicht dargestellte, Druckmessvorrichtung am Konzentratsammelbehälter 70.

Für Brüden, die evtl. genutzt werden können, besteht über eine Brüdenleitung 71 die Möglichkeit die anfallenden Brüden in die Druckleitung 32 zu fördern.

Das im Konzentratsammelbehälter 70 enthaltene Konzentrat wird über eine Auslassleitung 99 über den Konzentrat/Abfallflüssigkeit-Wärmetauscher 101, in dem eine Wärmeabgabe vom heißen Konzentrat zur Vorerwärmung der am Zulauf 1 zugeführten Flüssigkeit, einer weiteren Verwertung zugeführt. Zur Vermeidung eines stoßweisen Ablaufs ist in der Auslassleitung 99 ein Regelventil 100 angeordnet, welches über eine Füllstandsmessvorrichtung im Konzentratsammelbehälter 70 gesteuert wird.

Bei nicht ausreichender Kompressionswärme, was insbesondere im Anfahrbetrieb der Fall sein kann, kann über die Zuschaltung einer externen Wärmequelle, die aus einem Wärmeerzeuger 120 mit integriertem Wärmeaustauscher besteht, der mittels der Ventile 121 und 122 mit der Druckleitung 32 verbunden ist, die erforderliche Reaktionstemperatur eingestellt werden. Dazu wird das Trägergas-Dampfgemisch in den Wärmetauscher des Wärmeerzeugers 120, wobei die Druckleitung 32 mittels des Ventils 33 abgesperrt wird, geleitet.

Eine automatisierte Zuschaltung dieser externen Wärmequelle 120 kann über eine, nicht dargestellte, Temperaturmessvorrichtung in Verbindung mit Regelventilen 33, 121 und 122 erfolgen. Dagegen erfolgt das Abschalten dieser externen Wärmequelle vorzugsweise stets über eine, ebenfalls nicht dargestellte, Temperaturmessvorrichtung mit einem umgekehrten Schaltvorgang der eben erwähnten Regelventile 33, 121 und 122.

Insbesondere zur Abschlämmung der Verdampfer/Kondensations-Wärmetauschers 23 und 27 ist eine Abschlämmvorrichtung vorgesehen, die eine Kondensatpumpe 112 umfaßt, die über eine Saugleitung 110 und dem Ventil 111 mit dem Entgasungsbehälter 52 verbunden ist. Zur Abschlämmung kann in diesem Fall über eine Kondensatdruckleitung 113,116 und 118 das Kondensat zur Abschlämmung in eine Einmischvorrichtung 21 und in die Trägergas-Dampfleitungen 20 und 32 eingespeist werden.

Zur Betriebsüberwachung sind bei der Abschlämmung in der Kondensatdruckleitung 113 sowohl eine Druckmessvorrichtung, eine Temperaturmessvorrichtung und eine Durchflussmengenmessvorrichtung, welche alle wegen der Übersicht nicht dargestellt sind, angeordnet.

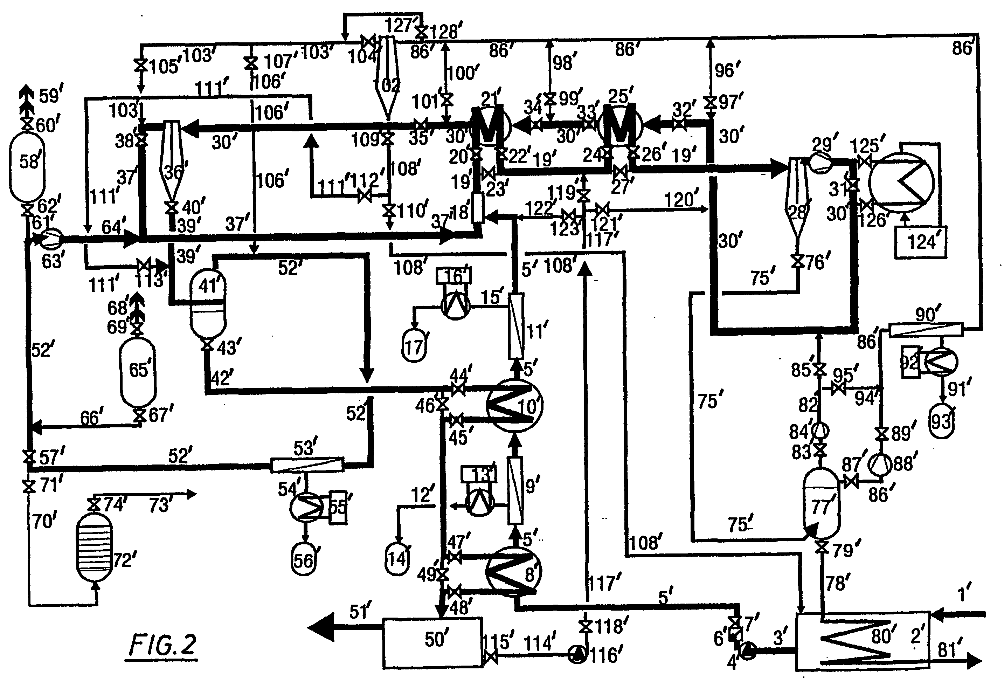

Eine teilweise alternative Verfahrensführung ist im Fließbild gemäß Fig. 2 gezeigt, bei dem Aufbereitungsflüssigkeiten, wie z. B. in der Produktion anfallende Abfallflüssigkeiten, z. B. Lösungsmittel in unterschiedlichen Verdünnungen, oder Meer- und/oder Brackwasser zur Gewinnung von Trink- und Brauchwasser ggf. vorgereinigt über den Zulauf 1' in einen Pumpensumpf 2' eingeleitet werden. Im Pumpensumpf 2' ist ein KonzentratlFlüssigkeit-Wärmetauscher 80' angeordnet, durch den eine Vorerwärmung der Flüssigkeit erfolgt. Dieser Vorerwärmung wird mittels einer, nicht dargestellten, Temperaturmessvorrichtung gemessen.

Anschließend wird die so vorerwärmte Aufbereitungsflüssigkeit über eine Pumpe 4' zur Vorerwärmung und Vorreinigung einer ersten Vorerwärmungs/Abscheideeinrichtung 5', 8', 9', 12', 13', 14' zugeführt, die einen Vorerwärmungs-Wärmetauscher 8' und eine dem Vorerwärmungs-Wärmetauscher 8' nachgeschaltete Abscheideeinrichtung 9', 12', 13', 14' aufweist. Der Vorerwärmungs-Wärmetauscher 8' ist hier gleichzeitig als Kondensat/Aufbereitungsflüssigkeit-Wärmetauscher ausgebildet, in dem die Temperatur der zu reinigenden Aufbereitungsflüssigkeit abhängig vom vorhandenen Druck möglichst nahe an eine gewünschte Verdampfungstemperatur erwärmt wird.

Zur Vermeidung vom Trockenlauf der Pumpe 4' ist im Pumpensumpf 2' eine nicht dargestellte Füllstandsmessvorrichtung vorgesehen. Mit dieser Füllstandsmessvorrichtung wird erreicht, dass der Konzentrat/Abfallflüssigkeit-Wärmetauscher 80' immer von Flüssigkeit überdeckt ist und die Pumpe 4' mit einem ausreichenden Vordruck beschickt werden kann. Dieser Vordruck ist variabel und von der Temperatur der zu fördernden Abfallflüssigkeit abhängig. Der Minimalschaltpunkt der Füllstandsmessvorrichtung wird mittels einer Verknüpfung mit der Temperaturmessvorrichtung kontinuierlich angepasst.

Der Zulauf zur Pumpe 4' erfolgt über eine Zulauf/Saugleitung 3' aus dem Pumpensumpf 2', wobei die Abfallflüssigkeit über eine Druckleitung 5' in die eine Rückschlagklappe 6' und ein Absperrschieber 7' integriert ist, sowie über den Kondensat/Abfatiftüssigkeit-Wärmetauscher 8' als Vorerwärmungs-Wärmetauscher zu einer Bestandteil der Abscheideeinrichtung bildenden Entspannungsvorrichtung 9' in der Form einer Pervaporationsmembrananlage gefördert wird. Dort erfolgt eine Abscheidung des entsprechend seiner Siedepunkttemperatur entstandenen Dampfes und/oder der z. B. in dem Meer- und/oder Brackwasser vorhandenen Inertgase bzw. des vorhandenen und entstandenen gasförmigen CO₂ aus der vorgewärmten Aufbereitungsfiüssigkeit. Der abgeschiedene Dampf und/oder Gas werden über eine Leitung 12' einer Kühlvorrichtung mit Wärmetauscher 13' zugeführt und in verflüssigter Form in einem Sammelbehälter 14' gespeichert. Bei dem Kühlvorgang entsteht in der Leitung 12' ein Unterdruck durch den die Ableitung des anfallenden Dampfes aus der Entspannungsvorrichtung 9' bewirkt wird. Sind verdampfbare, nicht azeotrope Flüssigkeiten mit unterschiedlichen Siedepunkttemperaturen in der zu behandelnden Abfallflüssigkeit vorhanden, so kann durch eine aufeinanderfolgende Mehrfachanordnung von Vorerwärmungs/Abscheideeinrichtungen, hier z. B. eine weitere Vorerwärmungs/Abscheideeinrichtung 10', 11', 15', 16', 17' in Verbindung mit einer Verfahrensführung, bei der einer Aufbereitungsflüssigkeit ein Trägergas als Schleppgas zugeführt wird, eine mehrstufige fraktionierte Abscheidung von niedrigersiedenden flüssigen Verunreinigungen und/oder gasförmigen Verunreinigungen, z.B. in Form von Inhalts- und/oder Wertstoffen aus der Aufbereitungsflüssigkeit, durchgeführt werden.

In der Einmischvorrichtung 18, die verbunden ist mit einer Trägergas-/Treibgaszufuhrleitung 37' und einer Trägergas-Nassdampfleitung 19' wird die durch die mehrstufige Vorerwärmung auf die optimale Temperatur vorerwärmte und vorgereinigte Aufbereitungsflüssigkeit im Trägergasstrom feinstverteilt, so dass eine spontane Verdampfung möglich ist. Dieses dadurch sich ergebende nasse Trägergas-Dampfgemisch gelangt über die Gemischleitung 19' in einen VerdampferlKondensations-Wärmetauscher 21', in dem eine weitere Erwärmung mit dem Ziel einer Überhitzung des Trägergas-Dampfgemisches erfolgt. Ggf. kann hier mittels einem weiteren Verdampfer/Kondensations-Wärmetauscher 25' eine Nachheizung erfolgen. Dieser Verdampfer/Kondensations-Wärmetauscher 21' wird durch das Öffnen oder Schließen der Ventile 20', 22', und 23' zu- oder abgeschaltet. Die gleiche Schaltung ist für den Verdampfer/Kondensations-Wärmetauscher 25' durch das Öffnen und/oder Schließen der Ventile 24', 26' und 27' möglich. Die erforderlichen Temperaturen und Betriebsdrücke des Trägergas-Dampfgemisches sind dabei von den abzuscheidenden Inhaltsstoffen und den thermischen Größen der zu reinigenden Abfallflüssigkeit abhängig. Daher können Temperaturen zwischen 50°C und 250°C sowie Betriebsdrücke zwischen 0,5 bar und 20 bar erforderlich werden.

Das nasse Trägergas-Dampfgemisch mit dem bezüglich der Basisflüssigkeit höhersiedenden flüssigen Rest bzw. den in der Basisflüssigkeit enthaltenen Salzen der zu reinigenden Aufbereitungsflüssigkeit wird anschließend in einen Konzentratabscheider 28' eingeleitet, indem dieser flüssige Rest und/oder eine Salzsole als Konzentrat abgeschieden wird. Dabei kann dieser Konzentratabscheider 28' beispielsweise als Zyklon oder Prallplattenabscheider ausgebildet sein. Im Falle des Prallplattenabscheiders sind sowohl Einplatten- als auch Mehrplattenabscheider einsetzbar.

Das nunmehr keine Restflüssigkeit mehr enthaltende Trägergas-Trockendampfgemisch verläßt über eine Leitung 31' den Konzentratabscheider 28' und wird mittels eines Verdichters 29' unter gleichzeitiger Temperaturerhöhung auf den für ein Trägergas-Trockendampfgemisch optimierten Betriebsdruck eingestellt. Dieses Trägergas-Trockendampfgemisch gelangt über eine Druckleitung 30' zu den Verdampfer/Kondensations-Wärmetauscher 25', 21' und wird dort unter Kondensation des Trockendampfes des Trägergas-Trockendampfgemisches, nämlich der Basisflüssigkeit der Aufbereitungsflüssigkeit, abgekühlt, wobei gleichzeitig eine Erhitzung des nassen Trägergas-Dampfgemisches, das von der Einmischvorrichtung 18' zu dem Konzentratabscheider 28' strömt, erfolgt.

Das Kondensat wird anschließend in einem Kondensatabscheider 36' abgeschieden. Als Kondensatabscheider 36' kommen hier ebenfalls z. B. ein Zyklon oder ein Prallplattenabscheider, z. B. ein Einplatten- oder Mehrplattenabscheider, zum Einsatz.

Das im Kondensatabscheider 36' vom Kondensat befreite Trägergas kann in einer ersten Verfahrensführung über die Trägergasleitung 37', in die eine Absperrvorrichtung 38' integriert ist, zu der Einmischvorrichtung 18' direkt zurückgeführt. werden. Als Trägergas kommen beispielsweise alle in den jeweiligen Flüssigkeiten nicht oder nur schwer löslichen Gase zur Anwendung, z. B. Inertgase.

Das im Kondensatabscheider 36' anfallende Kondensat wird über eine Kondensatabtaufleitung 39' mit einer Absperrvorrichtung 40 in einen Kondensatsammelbehälter 41' abgeleitet, wobei über eine Füllstandsmessung in Verbindung mit einem Regelventil 43' ein möglichst trägergasverlustfreier Ablauf erzielt wird. Das am Kondensatsammelbehälter 41' anfallende Kopfprodukt, in dem noch Trägergas enthalten ist, wird anschließend als Kopfprodukt über eine an den Kondensat-Sammelbehälter 41' kopfseitig angeschlossene Abgasleitung 52' abgezogen und anschließend Ober eine Pervaporationsvorrichtung 53' zur Trägergastrocknung sowie Ober eine Gasleitung 64' in einen weiteren Trägergaskreislauf ebenfalls wiederum der Trägergaszuführleitung 37' zugeführt. In diesem Trägergaskreislauf ist ferner ein Verdichter 63' vorgesehen. Der Pervaporationsvorrichtung 53', vorzugsweise einer Pervaporationsmembran, ist eine Kühlvorrichtung mit Wärmetauscher 55' nachgeschaltet, dem wiederum ein Kondensat-Sammelbehälter 56' nachgeschaltet ist. Beim Kühlvorgang wird hier ein Unterdruck in der Leitung 54' erzeugt, durch den das in der Pervaporationsmembran 53' abgeschiedene Kondensat aus dieser gesaugt wird.

Aus dem Kondensatsammelbehälter 41' wird das Kondensat über die Vorerwärmungs-Wärmetauscher der VorerwärmungsiAbscheideeinrichtung bildenden Kondensat/Abfallflüssigkeit-Wärmetauscher 10' und 8' unter Abbau des vorhandenen Betriebsdruckes mittels einer Ablaufleitung 42' in einen Entgasungsbehälter 50' geleitet. Beim Durchlauf des Kondensats durch die Kondensat/Abfallflüssigkeit-Wärmetauscher 8', 10' findet in der zuvor beschriebenen Art und Weise eine Wärmeübertragung auf die der Einmischvorrichtung 18' über die Druckleitung 5 zugeführte Aufbereitungsflüssigkeit zu deren Vorerwärmung und zur Abtrennung von gasförmigen und/oder niedersiedenden Verunreinigungen statt.

Der Entgasungsbehälter 50' dient dazu, die im Kondensat unter vorherrschenden Betriebsdruckbedingungen gelösten gasförmigen Stoffe nach der Entspannung zu entfernen. Anschließend kann dann das Kondensat über den Kondensatablauf 51' abfließen.

Mittels der Ventile 23' und 27' in der Gemischleitung 19' kann entsprechend auf die Verdampfer/Kondensations-Wärmetauscher 21', 25' als Einzelaggregat oder als Gesamtaggregat umgeschaltet werden. Dazu ist es erforderlich, dass das Trägergas-Trockendampfgemisch der Druckleitung 30' entsprechend der erforderlichen Schaltung über Umgehungsleitungen 96', 98' und 100' und der Umgehungsleitung 86' eingeleitet wird. Zur Einstellung dienen hier die Regelventile 32', 33', 34' und 35' in der Druckleitung 30' und die Regelventile 97', 99' und 101' in den Umgehungsleitungen 96', 98', 100' und 86'.

Die Umgehungsleitung 86' kann zur Entlastung des Kondensatabscheiders 36' ein zusätzlicher, zweiter Kondensatabscheider als Notfall/Entlastungs-Kondensatabscheider 102' zugeschaltet werden. Das in dem Notfall/Entlastungs-Kondensatabscheider 102' anfallende Kondensat wird über Kondensatleitungen 108', 111' in die Kondensatablaufleitung 39' des ersten Kondensatabscheiders 36' geleitet und anschließend dem Kondensatsammelbehälter 41' zugeführt. Das am Notfall/Entlastungs-Kondensatabscheider 102' abgeschiedene kondensatfreie Trägergas kann über eine Leitung 103' entweder direkt in die Trägergaszuführleitung 37' eingespeist werden oder entsprechend der jeweils gegebenen Prozessbedingungen mittels der Leitung 106' der an den Kondensatsammelbehälter 41' angeschlossenen Abgasleitung 52' zugeführt werden und anschließend über die Pervaporationsmembran 53' zur Trägergastrocknung sowie über die Gasleitung 64' in einem weiteren Trägergaskreislauf ebenfalls wiederum der Trägergaszuführleitung 37' zugeführt werden.

Wie dem Fließbild der Fig. 2 weiter zu entnehmen ist, kann in den Trägergaskreislauf ferner ein Trägergasspeicherbehälter 58' eingeschalten werden, um einen Verlust von Trägergas während des Betriebs der Anlage auszugleichen. Dieser Trägergasausgleich erfolgt ggf. unter Nutzung eines hier nicht dargestellten Verdampfers über eine Gasleitung 61', in der ein Regelventil 62' angeordnet ist, wobei das Ausgleichsträgergas in die Gasleitung 52' vor einem Ansaugstutzen des Trägergasverdichters 63' zugeführt wird. Der Trägergasspeicherbehälter 58' selbst ist durch eine Ablassvorrichtung gesichert, die ein Ablassrohr 59' und ein Ablassventil 60' aufweist.

Ferner ist für eine Notentlastung ein Abluftfilter 72' vorgesehen, wobei die Entlastung ausgehend von der Druckleitung 30' über einen ersten Leitungsverbund 86', 96', 98', 100' und den Notfall/Entlastungs-Kondensatabscheider 102' sowie einen zweiten Leitungsverbund 103', 106', 52', 70', 73' und den Ventilen 71' und 74' sowie den Abluftfilter 72' selbst in den betriebsdruckfreien Raum erfolgt. Das im Notfall/Entlastungs-Kondensatabscheider 102' in diesem Fall anfallende Kondensat wird über die Leitung 108' bei geöffneten Regelventilen 109', 110' in den Pumpensumpf 2' zurückgeführt.

Um im Falle einer Nassoxidation die erforderlichen. Sauerstoffmengen zur Verfügung zu stellen, ist ferner ein Sauerstoffbehälter mit Sauerstoffverdampfer 65' vorgesehen, der Ober eine Sauerstoffleitung 66' mit einem Regelventil 67' an die Gasleitung 52' des Trägergaskreislaufes und damit an den Trägergasverdichter 63' angeschlossen werden kann. Die Sauerstoffzufuhr wird dabei über eine in der Druckleitung 30' des Trägergas-Trockendampfgemisch-Kreislaufs angeordnete, nicht dargestellte, Sauerstoffmessvorrichtung gesteuert. Zur Drucksicherung am Sauerstoffbehälter mit Sauerstoffverdampfer 65' ist eine Druckentlastungsleitung 68' mit einem Entlastungsventil 69' vorgesehen, das von einer, am Sauerstoffbehälter 65' angeordneten, Druckmessvorrichtung geschalten wird.

Das im Konzentratabscheider 28' anfallende Konzentrat wird über eine Konzentratablaufleitung 75' einem Konzentratsammelbehälter 77' zugeführt. Dabei wird über ein Regelventil 76' eine trägergasfreie Ableitung des Konzentrats sichergestellt. Die Einleitung des Konzentrats in den Konzentratsammelbehälter 77' erfolgt unterhalb des minimalen Konzentratspiegels, so dass ein Brüdenniederschlag erfolgen kann.

im Falle einer Brüdenbildung können die Brüden mittels eines Brüdenverdichters 84', 88' über die Leitungen 82', 86' und 94' mit den Ventilen 83', 85', 87', 89' und 95' über eine besonders vorteilhafte und bevorzugte Brüden-Kondensations-Vorrichtung, ggf. mit einer Pervaporationsvorrichtung 90', bestehend aus einer Kühlvorrichtung 92' mit Kondensatsammelbehälter 93', oder in den Notfall/Entlastungs-Kondensatabscheider 102' niedergeschlagen werden und dann über die Kondensatleitung 108' in den Pumpensumpf 2' zurückgeführt werden.

Die Steuerung des Brüdenverdichters 84'/88' und der entsprechenden Regelventile 83', 85', 87', 89', 95' erfolgt über eine, nicht dargestellte, Druckmessvorrichtung am Konzentratsammelbehälter 77'.

Für Brüden, die evtl. genutzt werden können, besteht über eine Brüdenleitung 82' die Möglichkeit die anfallenden Brüden in die Druckleitung 30' zu fördern.

Das im Konzentratsammelbehälter 77' enthaltene Konzentrat wird über eine Auslassleitung 78' über den Konzentrat/Abfallflüssigkeit-Wärmetauscher 80', in dem eine Wärmeabgabe vom heißen Konzentrat zur Vorerwärmung der am Zulauf 1' zugeführten Flüssigkeit, einer weiteren Verwertung zugeführt. Zur Vermeidung eines stoßweisen Ablaufs ist in der Auslassteitung 78' ein Regelventil 79' angeordnet, welches über eine Füllstandsmessvorrichtung im Konzentratsammelbehälter 77' gesteuert wird.

Bei nicht ausreichender Kompressionswärme, was insbesondere im Anfahrbetrieb der Fall sein kann, kann über die Zuschaltung einer externen Wärmequelle, die aus einem Wärmeerzeuger 124' mit integriertem Wärmetauscher besteht, der mittels der Ventile 125' und 126' mit der Druckleitung 30' verbunden ist, die erforderliche Reaktionstemperatur eingestellt werden. Dazu wird das Trägergas-Dampfgemisch in den Wärmetauscher des Wärmeerzeugers 124', wobei die Druckleitung 30' mittels des Ventils 31' abgesperrt wird, geleitet.

Eine automatisierte Zuschaltung dieser externen Wärmequelle 124' kann über eine nicht dargestellte, Temperaturmessvorrichtung in Verbindung mit Regelventilen 31', 125' und 126' erfolgen. Dagegen erfolgt das Abschalten dieser externen Wärmequelle vorzugsweise stets über eine, ebenfalls nicht dargestellte, Temperaturmessvorrichtung mit einem umgekehrten Schaltvorgang der eben erwähnten Regelventile 31', 125' und 126'.

Insbesondere zur Abschlämmung der Verdampfer/Kondensations-Wärmetauschers 21' und 25' ist eine Abschlämmvorrichtung vorgesehen, die eine Kondensatpumpe 116' umfasst, die Ober eine Saugleitung 114' und dem Ventil 115' mit dem Entgasungsbehälter 50' verbunden ist. Zur Abschlämmung kann in diesem Fall über eine Kondensatdruckleitung 117', 120' und 122' das Kondensat zur Abschlämmung in eine Einmischvorrichtung 18' und in die Trägergas-Dampfleitungen 19' und 30' eingespeist werden.

Zur Betriebsüberwachung sind bei der Abschlämmung in der Kondensatdruckleitung 117' sowohl eine Druckmessvorrichtung, eine Temperaturmessvorrichtung und eine Durchflussmengenmessvorrichtung, welche alle der Übersichtlichkeit wegen nicht dargestellt sind, angeordnet.

## Patentansprüche

1. Verfahren zur Aufbereitung von Flüssigkeiten als Aufbereitungsftüssigkeiten, insbesondere von Meer- und/oder Brackwasser und/oder einer Abfallflüssigkeit und/oder Abwasser,
die aus einer Basisflüssigkeit mit darin enthaltenen und/oder gelösten, im wesentlichen flüssigen und/oder gasförmigen und/oder salzförmigen Verunreinigungen besteht, durch Trennung der Verunreinigungen von der Basisflüssigkeit, wobei die Trennung dergestalt durchgeführt wird,
dass die Aufbereitungsflüssigkeit zur Vorerwärmung und Vorreinigung wenigstens einer Vorerwärmungs/Abscheideelnrichtung (5, 8, 9. 14, 15, 16; 10, 11, 12, 17, 18, 19; 5', 8', 9', 12', 13', 14'; 5', 10' 11', 15', 16'. 17') zugeführt wird, in der die Aufbereitungsflüssigkeit auf eine Temperatur unterhalb der Siedetemperatur der Basisflüssigkeit vorerwärmt wird, so dass die bezüglich der Basisflüssigkeit niedersiedenden flüssigen Verunreinigungen verdampfen und/oder die gasförmigen Verunreinigungen thermisch ausgetrieben sowie anschließend die so verdampften und/oder ausgetriebenen Verunreinigungen abgeschieden werden,
dass der derart vorerwärmten und vorgereinigten Aufbereitungsflüssigkeit ein im geschlossenen Trägergaskreislauf geführtes Trägergas zugeführt wird und dieses Gemisch durch Wärmezufuhr zu einem nassen Trägergas-Dampfgemisch verdampft wird dergestalt, dass die Basisflüssigkeit verdampft ist und die flüssigen Verunreinigungen mit Siedetemperaturen über der Siedetemperatur der Basisflüssigkett als Restflüssigkeitsanteil und/oder die in der Basisflüssigkeit enthattenen Salze als Salzsole verbleiben,
dass dieses nasse Trägergas-Dampfgemisch einem Konzentratabscheider (30; 28') zugeführt wird, in dem der Restflüssigkeitsanteil und/oder die Salzsole als Konzentrat abgeschieden wird,
dass das vom Restflüssigkeitsanteil und/oder der Salzsole befreite und damit gereinigte Trägergas-Dampfgemisch als Trägergas-Trockendampfgemisch komprimiert und dann abgekühlt wird dergestalt,
dass die Basisflüssigkeit kondensiert und in einem nachgeordneten Kondensatabscheider (38; 36') abgeschieden wird, und
dass das vom Kondensat befreite Trägergas anschließend der vorerwärmten und vorgereinigten Aufbereitungsflüssigkeit zugeführt wird.

2. Verfahren nach Anspruch 1, **dadurch gekennzeichnet, dass** die zu behandelnde Aufbereitungsflüssigkeit nacheinander wenigstens zwei hintereinandergeschalteten Vorerwärmungs/Abscheideeinrichtungen (5, 8, 9, 14, 15, 16; 10, 11, 12, 17, 18, 19; 5', 8', 9', 12', 13', 14'; 5', 10' 11', 15', 16' 17') zugeführt wird.

3. Verfahren nach Anspruch 1 oder 2, **dadurch gekennzeichnet, dass** die in wenigstens einem Vorerwärmungs-Wärmetauscher (8, 11; 8', 10') jeder Vorerwärmungs/Abscheideeinrichtung (5, 8, 9, 14, 15, 16; 10, 11, 12, 17, 18, 19; 5', 8', 9', 12', 13', 14'; 5', 10' 11', 15', 16' 17') vorgewärmte zu behandelnde Aufbereitungsflüssigkeit einer Entspannungsvorrichtung (9, 12; 9', 11') als Bestandteil einer Abscheideeinrichtung (9, 14, 15, 16; 12, 17, 18, 19; 9', 12', 13', 14'; 11', 15', 16', 17') einer Vorerwärmungs/Abscheideeinrichtung (5, 8, 9, 14, 15, 16; 10, 11, 12, 17, 18, 19; 5', 8', 9', 12', 13', 14'; 5', 10', 11', 15', 16', 17') zugeführt wird, mit der eine Abscheidung der niedersiedenden dampfförmigen Verunreinigungen und/oder gasförmigen Verunreinigungen erfolgt.

4. Verfahren nach Anspruch 3, **dadurch gekennzeichnet,**
**dass** die niedersiedenden dampfförmigen Verunreinigungen und/oder die gasförmigen Verunreinigungen von der Entspannungsvorrichtung (9, 12; 9', 11') ausgehend über eine Leitung (14, 17; 12', 15') einer Kühlvorrichtung mit Wärmetauscher (15, 18; 13', 16') als weiterem Bestandteil der Abscheideeinrichtung zugeführt und in einem Sammelbehälter (16, 19; 14', 17') gespeichert wird dergestalt,
**dass** beim Kühlvorgang ein Unterdruck in der. Leitung (14, 17; 12', 15') erzeugt wird, durch den die abgeschiedenen Verunreinigungen aus der Entspannungsvorrichtung (9, 12; 9', 11') gesaugt werden.

5. Verfahren nach einem der Ansprüche 1 bis 4, **dadurch gekennzeichnet, dass** jeder Vorerwärmungs-Wärmetauscher (8, 11; 8', 10') ein Kondensat/Aufbereitungsflüssigkeit-Wärmetauscher ist, mit dem eine Vorerwärmung durch das heiße aus einem Kondensatsammelbehälter (43; 41') kommende Kondensat erfolgt.

6. Verfahren nach einem der Ansprüche 1 bis 5, **dadurch gekennzeichnet, dass** eine weitere Wärmezufuhr für die Vorerwärmung der Aufbereitungsflüssigkeit in einem KonzentrailAufbereitungsfiüssigkeit-Wärmetauscher (101; 80') durch das heiße aus einem Konzentratsammelbehälter (70; 77') kommende Konzentrat erfolgt, wobei der Konzentrat/Aufbereitungsflüssigkeits-Wärmetauscher (101; 80') der wenigstens einen Vorerwärmungs/Abscheideeinrichtung (5, 8, 9, 14, 15, 16; 10, 11, 12, 17, 18, 19; 5', 8', 9', 12', 13', 14'; 5', 10' 11', 15', 16' 17') vorgeschaltet ist.

7. Verfahren nach einem der Ansprüche 1 bis 6, **dadurch gekennzeichnet, dass** die Aufbereitungsflüssigkeit im Vorerwärmungs-Wärmetauscher (10; 11') derjenigen Vorerwärmungs/Abscheideeinrichtung (10, 11, 12, 17, 18, 19; 5', 10', 11', 15', 16', 17'), nach der der Aufbereitungsfiüssigkeit das Trägergas zugeführt wird, bis möglichst nahe an die Verdampfungstemperatur der Basisflüssigkeit vorerwärmt wird.

8. Verfahren nach einem der Ansprüche 1 bis 7, **dadurch gekennzeichnet, dass** zumindest ein Teil der Wärmezufuhr für die Verdampfung zu dem nassen Trägergas-Dampfgemisch in wenigstens einem Verdampfer/Kondensations-Wärmetauscher (23, 27; 21', 25') durch das abströmende komprimierte gereinigte Trägergas-Trockendampfgemisch erfolgt, das in diesem wenigstens einen Verdampfer/Kondensations-Wärmetauscher (23, 27; 21', 25') durch die Wärmeabgabe zumindest teilweise kondensieren kann.

9. Verfahren nach einem der Ansprüche 1 bis 8, **dadurch gekennzeichnet, dass** das gesamte Trägergas in einem geschlossenen Kreislauf geführt wird.

10. Verfahren nach Anspruch 9, **dadurch gekennzeichnet,**
**dass** ein Teilmassenstrom des am Kondensatabscheider (38; 36') separierten Trägergases unmittelbar der Aufbereitungsflüssigkeit zugeführt wird, und
**dass** ein zweiter Teilmassenstrom des am Kondensatabscheider (38; 36') separierten Trägergases zum Trocknen über eine Gastrocknungsvorrichtung (55, 56; 53', 54', 55', 56') geführt und anschließend als getrocknetes Trägergas der Aufbereitungsflüssigkeit wieder zugeführt wird.

11. Verfahren nach einem der Ansprüche 1 bis 10, **dadurch gekennzeichnet, dass** die vorerwärmte und vorgereinigte Aufbereitungsflüssigkeit in einer Einmischvorrichtung (21; 18') feinstverteilt in den Trockengasmassenstrom eingeleitet wird.

12. Verfahren nach einem der Ansprüche 1 bis 11, **dadurch gekennzeichnet, dass** der vorerwärmten Aufbereitungsflüssigkeit vor deren Einleitung in eine Einmischvorrichtung (21; 18') ein Katalysator zugeführt wird.

13. Verfahren nach einem der Ansprüche 1 bis 12, **dadurch gekennzeichnet,**
**dass** zwei Verdampfer/Kondensations-Wärmetauscher (23, 27; 21', 25') verwendet sind, die durch entsprechende Verbindungsleitungen und Absperrorgane (25, 29; 23', 27') als Einzelaggregat oder Gesamtaggregat umschaltbar sind, und/oder
**dass** in der Trägergas-Trockendampfgemisch-Druckleitung (32; 30') ein Wärmeerzeuger (120; 124') mit Wärmetauscher zuschaltbar ist, und/oder
**dass** im Konzentratsammelbehälter (70; 77') anfallende Brüden komprimiert der Trägergas-Trockendampfgemisch-Druckleitung (32; 30') und/oder einer Umgehungsleitung (75; 86') zugeführt werden, und/oder
**dass** ein zweiter Kondensatabscheider als Notfall/Entlastungs-Kondensatabscheider (82; 102') vorgesehen ist, dem über die Umgehungsleitung (75; 86') bei ggf. gesperrten oder reduzierten Hauptleitungen (32; 30') Trägergas-Trockendampfgemisch und/oder Brüden zugeführt werden, wobei das gereinigte Trägergas aus dem Gasausgang des Notfall/Entlastungs-Kondensatabscheiders (82, 102') dem Trägergaskreislauf zugeführt wird und das Kondensat aus dem Flüssigkeitsausgang direkt oder indirekt dem Flüssigkeits-Ausgangssystem des ersten Kondensatabscheiders (38; 36') oder im Fall einer Druck-Notentlastung einem Pumpensumpf (2; 2') am Zulauf (1; 1') zugeführt wird.

14. Verfahren nach einem der Ansprüche 1 bis 13, **dadurch gekennzeichnet,**
**dass** bei einem Verlust von Trägergas im Trägergaskreislauf aus einem angeschlossenen Trägergasspeicher (103, 104, 105; 58', 59', 60') Trägergas nachgefüllt wird, und/oder
**dass** vor dem Kondensat-Ablauf (53; 51') ein Entgasungsbehälter (52; 50') angeordnet ist, mit dem noch gelöste gasförmige Stoffe nach der Entspannung entfernt werden, und/oder
**dass** zur Abschlämmung insbesondere des oder der Verdampfer/Kondensations-Wärmetauscher (23, 27; 21', 25') Kondensat vorzugsweise aus dem Entgasungsbehälter (52; 50') in die abzuschlämmenden Systembereiche pumpbar ist, und/oder
**dass** im Anwendungsfall einer Nassoxidation aus einem Sauerstoffbehälter mit Sauerstoffverdampfer (58, 61, 62; 65', 68', 69') gesteuert durch eine Sauerstoffmessvorrichtung der erforderliche Sauerstoff dem Trägergas zugeführt wird.

15. Vorrichtung zur Aufbereitung von Flüssigkeiten als Aufbereitungsflüssigkeiten, insbesondere von Meer- und/oder Brackwasser und/oder einer Abfallflüssigkeit und/oder Abwasser, insbesondere zur Durchführung eines Verfahrens nach den Ansprüchen 1 bis 14, wobei die Aufbereitungsflüssigkeit aus einer Basisflüssigkeit mit darin enthaltenen und/oder gelösten, im wesentlichen flüssigen und/oder gasförmigen und/oder salzförmigen Verunreinigungen besteht,
mit wenigstens einer Vorerwärmungs/Abscheideeinrichtung (5, 8, 9, 14,15,16; 10, 11, 12, 17, 18, 19; 5', 8', 9'. 12'. 13'. 14'; 5', 10' 11'. 15', 16'. 17') zur Vorerwärmung und Vorreinigung der Aufbereitungsflüssigkeft, die jeweils wenigstens einen Vorerwärmungs-Wärmetauscher (8, 11; 8', 10') und eine diesem-nachgeschaltete Abscheideeinrichtung (9, 14, 15, 16; 12, 17, 18, 19; 9', 12', 13', 14'; 11', 15'. 16', 17') umfasst dergestalt,
dass die Aufbereitungsflüssigkeit mittels dem Vorerwärmungs-Wärmetauscher (8, 11; 8',10') auf eine Temperatur unterhalb der Siedetemperatur der Basisflüssigkeit vorerwärmbar ist, und
dass mittels der nachgeschalteten Abscheideeinrichtung (9, 14, 15, 16, 12, 17, 18, 19; 9', 12', 13', 14'; 11', 15', 16', 17') die bezüglich der Basisflüssigkeit niedersiedenden flüssigen Verunreinigungen und/oder die gasförmigen Verunreinigungen abscheidbar sind,
mit einer Einmischvorrichtung (21; 18'), die der wenigstens einen Vorerwärmungs/Abscheideeinrichtung (5, 8, 9, 14, 15, 16; 10, 11,12, 17, 18, 19; 5', 8', 9', 12', 13', 14'; 5', 10' 11', 15', 16', 17)) nachgeschaltet ist und in der der vorerwärmten und vorgereinigten Aufbereitungsflüssigkeit ein im geschlossenen Trägergaskreislauf geführtes Trägergas über eine Trägergasleitung (39; 37') zuführbar ist dergestalt,
dass in der Einmischvorrichtung (21; 18') eine Verleitung, vorzugsweise eine Feinstverteilung, der Aufbereitungsflüssigkeit im Trägergas zu einem Trägergas-Aufbereitungsflüssigkeit-Gemisch durchführbar ist,
mit wenigstens einem der Einmischvorrichtung (21; 18') nachgeschalteten Verdampfer/Kondensations-Wärmetauscher (23, 27; 21', 25') zur Verdampfung des Trägergas-Aufbereitungsflüssigkeit-Gemisches zu einem nassen Trägergas-Dampfgemisch, in der die Basisflüssigkeit verdampft ist und die flüssigen Verunreinigungen mit Siedetemperaturen über der Siedetemperatur der Basisflüssigkeit als Restflüssigkeitsanteil und/oder die in der Basisflüssigkeit enthaltenen Salze als Salzsole verbleiben,
mit einem dem wenigstens einen Verdampfer/Kondensations-Wärmetauscher (23, 27; 21', 25') nachgeschalteten Konzentratabscheider (30; 28') zur Abscheidung des Restflüssigkeitsanteils und/oder der Salzsole sowie eines Trägergas-Trockengemisches vom nassen Trägergas-Dampfgemisch,
mit einem dem Konzentratabscheider (30; 28') nachgeschalteten Kondensatabscheider (38; 36'), dem das Trägergas-Trockendampfgemisch nach Durchlaufen des wenigstens einen Verdampfer/Kondensations-Wärmetauschers (23, 27; 21', 25') und dortiger Kondensation der Basisflüssigkeit zur Abscheidung der Basisflüssigkeit als Kondensat und dem Trägergas zuführbar ist, wobei das Trägergas der Einmischvorrichtung (21; 18') über den Trägergaskreislauf wiederzuführbar ist.

16. Vorrichtung nach Anspruch 15, **dadurch gekennzeichnet, dass** zur Vorerwärmung und Vorreinigung wenigstens zwei Vorerwärmungs/Abscheideeinrichtungen (5, 8, 9, 14, 15, 16; 10, 11, 12, 17, 18, 19; 5', 8', 9', 12', 13', 14'; 5', 10' 11', 15', 16' 17') hintereinandergeschaltet sind.

17. Vorrichtung nach Anspruch 15 oder 16, **dadurch gekennzeichnet, dass** die Abscheideeinrichtung (9, 14, 15, 16; 12, 17, 18, 19; 9', 12', 13', 14'; 11', 15', 16' 17') jeder Vorerwärmungs/Abscheideeinnchtung (5, 8, 9, 14, 15, 16; 10, 11, 12, 17, 18, 19; 5', 8', 9', 12', 13', 14'; 5', 10' 11', 15', 16' 17') eine dem Vorerwärmungs-Wärmetauscher (8, 11; 8', 10') nachgeschaltete Entspannungsvorrichtung (9, 12; 9', 11') aufweist zur Abscheidung von bezüglich der Basisflüssigkeit niedersiedenden dampfförmigen Verunreinigungen und/oder von gasförmigen Verunreinigungen.

18. Vorrichtung nach Anspruch 17, **dadurch gekennzeichnet, dass** die Entspannungsvorrichtung (9, 12) durch einen Entspannungsbehälter mit Pumpe gebildet ist.

19. Vorrichtung nach Anspruch 17, **dadurch gekennzeichnet, dass** die Entspannungsvorrichtung (9'; 11') durch eine Pervaporationsmembrananlage gebildet ist.

20. Vorrichtung nach einem der Ansprüche 17 bis 19, **dadurch gekennzeichnet,**
**dass** der Entspannungsvorrichtung (9, 12; 9', 11') jeweils eine Kühlvorrichtung mit Wärmetauscher (15, 18; 13', 16') als weiterer Bestandteil der Abscheideeinrichtung nachgeschaltet ist, und
**dass** der Kühlvorrichtung mit Wärmetauscher (15, 18; 13', 16') ein Sammelbehälter (16, 19; 14', 17') als weiterer Bestandteil der Abscheideeinrichtung nachgeschaltet ist dergestalt,
**dass** beim Kühlvorgang ein Unterdruck in einer Saugleitung (14, 17; 12', 15') erzeugbar ist, durch den die abgeschiedenen Verunreinigungen aus der Entspannungsvorrichtung (9, 12; 9', 11') absaugbar sind.

21. Vorrichtung nach einem der Ansprüche 15 bis 20, **dadurch gekennzeichnet,**
**dass** jeder Vorerwärmungs-Wärmetauscher (8, 11; 8', 10') durch einen Kondensat/Aufbereitungsftüssigkeit-Wärmetauscher gebildet ist, und/oder
**dass** für eine weitere Wärmezufuhr zur Vorerwärmung der Aufbereitungsflüssigkeit der wenigstens einen Vorerwärmungs/Abscheide-einrichtung (5, 8, 9, 14, 15, 16; 10, 11, 12, 17, 18, 19; 5', 8', 9', 12', 13', 14'; 5', 10' 11', 15', 16' 17') ein Konzentrat/Aufbereitungsflüssigkeit-Wärmetauscher (101; 80') vorgeschaltet ist.

22. Vorrichtung nach einem der Ansprüche 15 bis 21, **dadurch gekennzeichnet,**
**dass** wenigstens ein Teilbereich der Zuführleitung vom Konzentratabscheider (30; 28') zum Kondensatabscheider (38; 36') als Trägergas-Trockendampfgemisch-Druckleitung (32; 30') mit vorgeschaltetem Verdichter (31; 29') zur Druck- und Temperaturerhöhung des Trägergas-Trockendampfgemisches ausgebildet ist, und/oder
**dass** in der Druckleitung (32; 30') zur Betriebsüberwachung wenigstens eine Messvorrichtung, vorzugsweise wenigstens eine Durchflussmessvorrichtung und/oder wenigstens eine Temperaturmessvorrichtung und/oder wenigstens eine Druckmessvorrichtung angeordnet ist, die Bestandteil eines Regelkreises sind.

23. Vorrichtung nach Anspruch 22, **dadurch gekennzeichnet,**
**dass** die Druckleitung (32; 30') vorzugsweise im Falle einer nicht ausreichenden Kompressionswärme, insbesondere im Anfahrbetrieb, mit einem Wärmeerzeuger (120; 124') ggf. über einen Wärmetauscher koppelbar ist, und
**dass** für eine automatisierte Zuschaltung und/oder Abschaltung des Wärmeerzeugers (120; 124') prozessleitungsseitig wenigstens ein Stellglied, vorzugsweise wenigstens ein Regelventil (33, 121, 122; 31', 125', 126') und wenigstens eine Messvorrichtung, vorzugsweise eine Temperaturmessvorrichtung und/oder Druckmessvorrichtung vorgesehen sind, die jeweils mit einem Regler gekoppelt sind.

24. Vorrichtung, nach einem der Ansprüche 15 bis 23, **dadurch gekennzeichnet,**
**dass** das Trägergas zwischen einem Kondensatabscheider (38; 36') und einer Trägergas-Einmischvorrichtung (21; 18') in einem geschlossenen Trägergaskreislauf geführt ist dergestalt,
**dass** ein Teilmassenstrom des am Kondensatabscheider (38; 36') separierten Trägergases direkt zur Einmischvorrichtung (21; 18') über eine Trägergaszuführieitung (39; 37') zuführbar ist, und
**dass** ein weiterer, zweiter Teilmassenstrom des am Kondensatabscheider (38; 36') separierten Trägergases zum Trocknen über eine Gastrocknungsvorrichtung (55, 56; 53', 54', 55', 56') zur Einmischvorrichtung (21; 18') geführt ist.

25. Vorrichtung nach Anspruch 24, **dadurch gekennzeichnet, dass** im Trägergaskreislauf hinter einem Kondensatsammelbehälter (43) ein Gastrockner (55) zur Trocknung von Trägergas, insbesondere von nassem Restträgergas aus dem Kondensatsammelbehälter (43) angeordnet ist, dem wiederum ein Kondensatabscheider (56) nachgeschaltet ist.

26. Vorrichtung nach Anspruch 24, **dadurch gekennzeichnet, dass** die Gastrocknungsvorrichtung durch eine Pervaporationsmembran (53') mit Kühlvorrichtung und Wärmetauscher (55') sowie nachgeschaltetem Sammelbehälter (56') gebildet ist.

27. Vorrichtung nach einem der Ansprüche 24 bis 26, **dadurch gekennzeichnet, dass** vom Kondensatabscheider (38; 36') ausgehend über einen Kondensatsammelbehälter (43; 41') wenigstens eine Gasleitung (54; 52') unter Zwischenschaltung der Gastrocknungsvorrichtung (55, 56; 53', 54', 55', 56') in einem Kreislauf zur Trägergaszuführleitung (39; 37'), vorzugsweise unter Zwischenschaltung eines Verdichters (108; 63'), zurückgeführt ist.

28. Vorrichtung nach einem der Ansprüche 15 bis 27, **dadurch gekennzeichnet,**
**dass** in den Trägergaskreislauf ein Trägergasspeicher (103; 58') zum Ausgleich von Trägergasverlusten zuschaltbar ist, und/oder
**dass** für eine Nassoxidation in den Trägergaskreislauf, vorzugsweise in eine Gasleitung (54; 52') vom Kondensatsammelbehälter (43; 41') zur Trägergaszuführleitung (39; 37'), ein Sauerstoffbehälter (58; 65') mit Sauerstoffverdampfer schaltbar ist, und/oder
**dass** am Kondensatablauf ein Entgasungsbehälter (52; 50') vorgesehen ist.

29. Vorrichtung nach einem der Ansprüche 15 bis 28, **dadurch gekennzeichnet,**
**dass** ein zweiter Kondensatabscheider als Notfall/Entfastungs-Kondensatabscheider (82; 102') vorgesehen ist, dem eingangsseitig über eine Umgehungsleitung (75; 86') Brüden vom Konzentratsammeibehälter (70; 77') und/oder Trägergas-Trockendampfgemisch über in die Umgehungsleitung mündende Umgehungsleitungen einer Druckleitung (32; 30') zwischen dem Konzentratabscheider (30; 28') und dem ersten Kondensatabscheider (38; 36') zuführbar ist, und
**dass** der Notfall/Entlastungs-Kondensatabscheider (82; 102') gasausgangsseitig eine Abgasleitung (95; 103') zu einer Trägergaszuführleitung (39; 37') zur Einmischvorrichtung (21; 18') und/oder wenigstens eine Leitung (97; 106') zu einer vom Kondensatsammelbehälter (43; 41') abgezweigten Gasleitung (54; 52') eines separaten Trägergaskreislaufs aufweist, wobei der Notfall/Entlastungs-Kondensatabscheider ferner kondensatausgangsseitig wenigstens eine Kondensatleitung (92) zum Kondensatsammelbehälter (43) aufweist, und
**dass** für eine Notentlastung vorzugsweise ein Abluftfilter (65; 72') vorgesehen ist, wobei die Entlastung ausgehend von der Druckleitung (32; 30') über einen ersten Leitungsverbund (75, 83, 85, 87; 86', 96', 98', 100') den Noffall/Entlastungs-Kondensatabscheider (82; 102') einen zweiten Leitungsverbund (95, 97, 54, 63; 103', 106', 52', 70') sowie den Abluftfilter (65; 72') in den betriebsdruckfreien Raum erfolgt, wobei das im Notfall/Entlastungs-Kondensatabscheider (82; 102') anfallende Kondensat über eine Leitung (89; 108') einem Pumpensumpf (2; 2') am Zulauf (1; 1') zuführbar ist.

30. Vorrichtung nach einem der Ansprüche 15 bis 29, **dadurch gekennzeichnet,**
**dass** dem Konzentratsammelbehälter (70; 77') für den Fall einer Brüdenbildung ein Brüdenverdichter (73, 73a; 84', 88') nachgeschaltet ist, und/oder
**dass** zur Abschlämmung wenigstens des oder der Verdampfer/Kondensations-Wärmetauscher (23, 27; 21', 25') eine Abschlämmvorrichtung, vorzugsweise bestehend aus einer Kondensatpumpe (112; 116'), einer Saugleitung (110; 114') und einem Entgasungsbehälter (52; 50') , vorgesehen ist, die über eine Einmischvorrichtung in eine entsprechende Prozessleitung (20, 32; 19', 30') einkoppetbar ist.

31. Vorrichtung nach einem der Ansprüche 15 bis 30, **dadurch gekennzeichnet, dass** für einen Brüdenniederschlag dem Konzentratabscheider (70; 77') eine Brüden-Kondensations-Vorrichtung (78, 79; 90', 92', 93'), die eine Kühlvorrichtung (78, 92') mit Kondensatsammelbehälter (79, 93') umfasst, nachgeschaltet ist.

## Claims

1. Method for treating liquids as treatment liquid, in particular sea water and/or brackish water and/or a waste liquid and/or wastewater,
which treatment liquid consists of a base liquid having present and/or dissolved therein essentially liquid and/or gaseous and/or salt-form impurities, by separating the impurities from the base liquid, the separation being carried out in such a manner
that the treatment liquid, for preheating and prepurification, is fed to at least one preheating/separation device (5, 8, 9, 14, 15, 16; 10, 11, 12, 17, 18, 19; 5', 8', 9', 12', 13', 14'; 5', 10', 11', 15', 16', 17') in which the treatment liquid is preheated to a temperature below the boiling temperature of the base liquid, so that the liquid impurities which boil lower with respect to the base liquid evaporate and/or the gaseous impurities are thermally expelled and also the impurities which are thus evaporated and/or expelled are then separated off,
that a carrier gas conducted in the closed carrier gas circuit is fed to the treatment liquid which has been preheated and prepurified in such a manner and this mixture, by supplying heat to a wet carrier gas-vapour mixture is evaporated in such a manner that the base liquid is evaporated and the liquid impurities having boiling temperatures above the boiling temperature of the base liquid remain as a residual liquid fraction and/or the salts present in the base liquid remain as salt brine,
that this wet carrier gas-vapour mixture is fed to a concentrate separator (30; 28') in which the residual liquid fraction and/or the salt brine is separated off as concentrate,
that the carrier gas-vapour mixture which has been freed from the residual liquid fraction and/or the salt brine and thus purified is compressed as carrier gas-dry vapour mixture and is then cooled in such a manner
that the base liquid is condensed and separated off in a downstream condensate separator (38; 36'), and
that the carrier gas freed from the condensate is then fed to the preheated and prepurified treatment liquid.

2. Method according to Claim 1, **characterized in that** the treatment liquid to be treated is fed successively to at least two series-connected preheating/separation devices (5, 8, 9, 14, 15, 16; 10, 11, 12, 17, 18, 19; 5', 8', 9', 12', 13', 14'; 5', 10', 11', 15', 16', 17').

3. Method according to Claim 1 or 2, **characterized in that** the treatment liquid to be treated which has been preheated in at least one preheating heat exchanger (8, 11; 8', 10') of each preheating/separation device (5, 8, 9, 14, 15, 16; 10, 11, 12, 17, 18, 19; 5', 8', 9', 12', 13', 14'; 5', 10', 11' , 15', 16', 17' ) is fed to an expansion apparatus (9, 12; 9', 11') as constituent of a separation device (9, 14, 15, 16; 12, 17, 18, 19; 9', 12', 13', 14'; 11', 15', 16', 17') of a preheating/separation device (5, 8, 9, 14, 15, 16; 10, 11, 12, 17, 18, 19; 5', 8', 9', 12', 13', 14'; 5', 10', 11', 15', 16', 17'), which separates off the lower-boiling vaporous impurities and/or gaseous impurities.

4. Method according to Claim 3, **characterized in that** the lower-boiling vaporous impurities and/or the gaseous impurities are fed from the expansion apparatus (9, 12; 9', 11') starting via a line (14, 17; 12', 15') to a cooling apparatus having a heat exchanger (15, 18; 13', 16') as a further constituent of the separation device and are stored in a collection vessel (16, 19; 14', 17') in such a manner
that in the cooling process reduced pressure is produced in the line (14, 17; 12', 15') which sucks the separated impurities out of the expansion apparatus (9, 12; 9', 11').

5. Method according to one of Claims 1 to 4, **characterized in that** each preheating heat exchanger (8, 11; 8', 10') is a condensate/treatment liquid heat exchanger which carries out a preheating via the hot condensate coming from a condensate collection vessel (43; 41').

6. Method according to one of Claims 1 to 5, **characterized in that** the hot concentrate coming from a concentrate collection vessel (70; 77') supplies further heat for preheating the treatment liquid in a concentrate/treatment liquid heat exchanger (101; 80'), the concentrate/treatment liquid heat exchanger (101; 80') being connected upstream of the at least one preheating/separation device (5, 8, 9, 14, 15, 16; 10, 11, 12, 17, 18, 19; 5', 8', 9', 12', 13', 14'; 5', 10', 11' , 15', 16' , 17').

7. Method according to one of Claims 1 to 6, **characterized in that** the treatment liquid is preheated to as close as possible to the evaporation temperature of the base liquid in the preheating heat exchanger (10; 11') of that preheating/separation device (10, 11, 12, 17, 18, 19; 5', 10', 11', 15', 16', 17'), downstream of which the carrier gas is fed to the treatment liquid.

8. Method according to one of Claims 1 to 7, **characterized in that** at least a part of the heat supply for the evaporation to the wet carrier gas vapour mixture is performed in at least one evaporator/condensation heat exchanger (23, 27; 21', 25') via the effluent compressed purified carrier gas-dry vapour mixture which can condense at least in part in this at least one evaporator/condensation heat exchanger (23, 27; 21', 25') via the heat given off.

9. Method according to one of Claims 1 to 8, **characterized in that** all of the carrier gas is conducted in a closed circuit.

10. Method according to Claim 9, **characterized in**
**that** a partial mass stream of the carrier gas separated in the condensate separator (38; 36') is fed immediately to the treatment liquid, and in
**that** a second partial mass stream of the carrier gas separated in the condensate separator (38; 36') is passed, for drying, over a gas drying apparatus (55, 56; 53', 54', 55', 56') and is then fed back to the treatment liquid as dry carrier gas.

11. Method according to one of Claims 1 to 10, **characterized in that** the preheated and prepurified treatment liquid is introduced very finely divided into the dry gas mass stream in a mixing apparatus (21; 18') .

12. Method according to one of Claims 1 to 11, **characterized in that** a catalyst is fed to the preheated treatment liquid before its introduction into a mixing apparatus (21; 18').

13. Method according to one of Claims 1 to 12, **characterized in**
**that** two evaporator/condensation heat exchangers (23, 27; 21', 25') are used which can be connected via corresponding connection lines and shut-off elements (25, 29; 23', 27'), as an individual unit or an overall unit, and/or in
**that** a heat generator (120; 124') with heat exchanger can be connected in the carrier gas-dry vapour mixture pressure line (32; 30'), and/or in
**that** vapours arising in the concentrate collection vessel (70; 77') are fed compressed to the carrier gas-dry vapour mixture pressure line (32; 30') and/or a bypass line (75; 86'), and/or in
**that** a second condensate separator is provided as emergency/relief condensate separator (82; 102'), to which carrier gas-dry vapour mixture and/or vapours are fed via the bypass line (75; 86') in the event of possibly blocked or reduced main lines (32; 30'), the purified carrier gas from the gas outlet of the emergency/relief condensate separator (82, 102') being fed to the carrier gas circuit and the condensate from the liquid outlet being fed directly or indirectly to the liquid outlet system of the first condensate separator (38; 36') or, in the case of a pressure-emergency relief, being fed to a pump sump (2; 2') at the feed (1; 1').

14. Method according to one of Claims 1 to 13, **characterized in**
**that** in the event of a loss of carrier gas in the carrier gas circuit, carrier gas is replenished from an attached carrier gas store (103, 104, 105; 58', 59', 60'), and/or in
**that** upstream of the condensate outlet (53; 51') is arranged a degassing vessel (52; 50') which removes gaseous substances which are still dissolved after the expansion, and/or in
**that** to purge in particular the evaporator/condensation heat exchanger or heat exchangers (23, 27; 21', 25') condensate can be pumped preferably from the degassing vessel (52; 50') into the system regions to be purged, and/or in
**that** in the case of use of wet oxidation, the required oxygen is fed to the carrier gas from an oxygen vessel having an oxygen evaporator (58, 61, 62; 65', 68', 69') under control via an oxygen measuring apparatus.

15. Apparatus for treating liquids as treatment liquids, in particular sea water and/or brackish water and/or a waste liquid and/or wastewater, in particular for carrying out a method according to Claims 1 to 14, the treatment liquid consisting of a base liquid having present and/or dissolved therein essentially liquid and/or gaseous and/or salt-form impurities,
having at least one preheating/separation device (5, 8, 9, 14, 15, 16; 10, 11, 12, 17, 18, 19; 5', 8', 9', 12', 13', 14'; 5', 10', 11', 15', 16', 17') for preheating and prepurifying the treatment liquid which comprises in each case at least one preheating heat exchanger (8, 11; 8', 10') and a downstream separation device (9, 14, 15, 16; 12, 17, 18, 19; 9', 12', 13', 14'; 11', 15', 16', 17'), in such a manner
that the treatment liquid can be preheated to a temperature below the boiling temperature of the base liquid by means of the preheating heat exchanger (8, 11; 8', 10'), and
that, by means of the downstream separation device (9, 14, 15, 16; 12, 17, 18, 19; 9', 12', 13', 14'; 11', 15', 16', 17') the liquid impurities which boil lower with respect to the base liquid and/or the gaseous impurities can be separated off,
having a mixing apparatus (21; 18'), which is downstream of the at least one preheating/separation device (5, 8, 9, 14, 15, 16; 10, 11, 12, 17, 18, 19; 5', 8', 9', 12', 13', 14'; 5' , 10' , 11' , 15' , 16' , 17' ) and in which a carrier gas conducted in the closed carrier gas circuit can be fed to the preheated and prepurified treatment liquid via a carrier gas line (39; 37') in such a manner
that, in the mixing apparatus (21; 18') the treatment liquid can be comminuted, preferably very finely comminuted, in the carrier gas to give a carrier gas-treatment liquid mixture,
having at least one evaporator/condensation heat exchanger (23, 27; 21', 25') downstream of the mixing apparatus (21; 18') for evaporating the carrier gas treatment liquid mixture to give a wet carrier gas-vapour mixture in which the base liquid is evaporated and the liquid impurities having boiling temperatures above the boiling temperature of the base liquid remain as a residual liquid fraction and/or the salts present in the base liquid remain as salt brine,
having a concentrate separator (30; 28') downstream of the at least one evaporator/condensation heat exchanger (23, 27; 21', 25') for separating off the residual liquid fraction and/or the salt brine and also a carrier gas-dry mixture from the wet carrier gas-vapour mixture,
having a condensate separator (38; 36') downstream of the concentrate separator (30; 28') to which the carrier gas-dry vapour mixture can be fed after passing through the at least one evaporator/condensation heat exchanger (23, 27; 21', 25') and condensation there of the base liquid to separate off the base liquid as condensate and the carrier gas, the carrier gas being able to be recirculated to the mixing apparatus (21; 18') via the carrier gas circuit.

16. Apparatus according to Claim 15, **characterized in that**, for the preheating and prepurification, at least two preheating/separation devices (5, 8, 9, 14, 15, 16; 10, 11, 12, 17, 18, 19; 5', 8', 9', 12', 13', 14'; 5', 10', 11', 15', 16', 17') are connected in series.

17. Apparatus according to Claim 15 or 16, **characterized in that** the separation device (9, 14, 15, 16; 12, 17, 18, 19; 9', 12', 13', 14'; 11', 15', 16', 17') of each preheating/separation device (5, 8, 9, 14, 15, 16; 10, 11, 12, 17, 18, 19; 5', 8', 9', 12', 13', 14'; 5', 10', 11', 15', 16', 17') has an expansion apparatus (9, 12; 9' 11') downstream of the preheating heat exchanger (8, 11; 8', 10') for separating off vaporous impurities boiling lower with respect to the base liquid and/or for separating off gaseous impurities.

18. Apparatus according to Claim 17, **characterized in that** the expansion apparatus (9, 12) is formed by an expansion vessel together with a pump.

19. Apparatus according to Claim 17, **characterized in that** the expansion apparatus (9'; 11') is formed by a pervaporation membrane system.

20. Apparatus according to one of Claims 17 to 19, **characterized in**
**that** downstream of each expansion apparatus (9, 12; 9', 11') is connected a cooling apparatus having a heat exchanger (15, 18; 13', 16') as a further constituent of the separation device, and in
**that** downstream of the cooling apparatus together with heat exchanger (15, 18; 13', 16') is connected a collection vessel (16, 19; 14', 17') as a further constituent of the separation device in such a manner
**that** in the cooling operation a reduced pressure can be generated in a suction line (14, 17; 12', 15') via which the impurities separated off can be sucked from the expansion apparatus (9, 12; 9', 11').

21. Apparatus according to one of Claims 15 to 20, **characterized in**
**that** each preheating heat exchanger (8, 11; 8', 10') is formed by a condensate/treatment liquid heat exchanger, and/or in
**that** for further heat supply for preheating the treatment liquid, a concentrate/treatment liquid heat exchanger (101; 80') is connected upstream of the at least one preheating/separation device (5, 8, 9, 14, 15, 16; 10, 11, 12, 17, 18, 19; 5', 8', 9', 12', 13', 14'; 5', 10', 11', 15', 16', 17').

22. Apparatus according to one of Claims 15 to 21, **characterized in**
**that** at least one partial region of the feed line from the concentrate separator (30; 28') to the condensate separator (38; 36') is formed as a carrier gas-dry vapour mixture pressure line (32; 30') having an upstream compressor (31; 29') for pressure and temperature elevation of the carrier gas-dry vapour mixture, and/or in
**that**, in the pressure line (32; 30'), for monitoring of operations, at least one measuring apparatus, preferably at least one flow measuring apparatus, and/or at least one temperature measuring apparatus, and/or at least one pressure measuring apparatus, is arranged which is a constituent of a control circuit.

23. Apparatus according to Claim 22, **characterized in**
**that** the pressure line (32; 30'), preferably in the case of inadequate heat of compression, in particular in the start-up operation, can be coupled to a heat generator (120; 124') if appropriate via a heat exchanger, and in
**that** for automated start-up and/or shut-off of the heat generator (120; 124'), on the process control side, at least one control element, preferably at least one control valve (33, 121, 122; 31', 125', 126') and at least one measuring apparatus, preferably a temperature measuring apparatus and/or pressure measuring apparatus, are provided which are each coupled to a controller.

24. Apparatus according to one of Claims 15 to 23, **characterized in**
**that** the carrier gas is conducted in a closed carrier gas circuit between a condensate separator (38; 36') and a carrier gas mixing apparatus (21; 18') in such a manner
**that** a partial mass stream of the carrier gas separated in the condensate separator (38; 36') can be fed directly to the mixing apparatus (21; 18') via a carrier gas feed line (39; 37'), and
**that** a further second partial mass stream of the carrier gas separated in the condensate separator (38; 36') is passed, for drying, over a gas drying apparatus (55, 56; 53', 54', 55', 56') to the mixing apparatus (21; 18').

25. Apparatus according to Claim 24, **characterized in that**, in the carrier gas circuit, downstream of a condensate collection vessel (43), there is arranged a gas dryer (55) for drying carrier gas, in particular wet residual carrier gas from the condensate collection vessel (43), downstream of which in turn is connected a condensate separator (56).

26. Apparatus according to Claim 24, **characterized in that** the gas drying apparatus is formed by a pervaporation membrane (53') having cooling apparatus and heat exchanger (55') and a downstream collection vessel (56').

27. Apparatus according to one of Claims 24 to 26, **characterized in that**, starting from the condensate separator (38; 36') via a condensate collection vessel (43; 41') at least one gas line (54; 52') is returned with intermediate connection of the gas drying apparatus (55, 56; 53', 54', 55', 56') in a circuit to the carrier gas feed line (39; 37'), preferably with intermediate connection of a compressor (108; 63').

28. Apparatus according to one of Claims 15 to 27, **characterized in**
**that** a carrier gas store (103; 58') can be connected to the carrier gas circuit to compensate for carrier gas losses, and/or in
**that** for a wet oxidation, an oxygen vessel (58; 65') together with oxygen evaporator can be connected to the carrier gas circuit, preferably to a gas line (54; 52') from the condensate collection vessel (43; 41') to the carrier gas feed line (39; 37'), and/or in
**that** a degassing vessel (52; 50') is provided at the condensate outlet.

29. Apparatus according to one of Claims 15 to 28, **characterized in**
**that** a second condensate separator is provided as emergency/relief condensate separator (82; 102'), to which, on the inlet side, via a bypass line (75; 86'), can be fed vapours from the concentrate collection vessel (70; 77') and/or carrier gas-dry vapour mixture via bypass lines of a pressure line (32; 30') which open out into the bypass line between the concentrate separator (30; 28') and the first condensate separator (38; 36'), and in
**that** the emergency/relief condensate separator (82; 102'), on the gas outlet side, has an off-gas line (95; 103') to a carrier gas feed line (39; 37') to the mixing apparatus (21; 18') and/or at least one line (97; 106') to a gas line (54; 52') which is branched off from the condensate collection vessel (43; 41') and is of a separate carrier gas circuit, the emergency/relief condensate separator, additionally on the condensate outlet side, having at least one condensate line (92) to the condensate collection vessel (43), and in
**that** for an emergency expansion, preferably one exhaust air filter (65; 72') is provided, the expansion taking place starting from the pressure line (32; 30') via a first line combination (75, 83, 85, 87; 86', 96', 98', 100'), the emergency/relief condensate separator (82; 102'), a second line combination (95, 97, 54, 63; 103', 106', 52', 70') and the exhaust air filter (65; 72') into the space free of operating pressure, the condensate arising in the emergency/relief condensate separator (82; 102') being able to be fed via a line (89; 108') to a pump sump (2; 2') at the feed (1; 1').

30. Apparatus according to one of Claims 15 to 29, **characterized in**
**that** a vapour compressor (73, 73a; 84', 88') is connected downstream of the concentrate collection vessel (70; 77') for the case of a vapour formation, and/or in
**that** for purging at least the evaporator/condensation heat exchanger or heat exchangers (23, 27; 21', 25') a purging device, preferably consisting of a condensate pump (112; 116'), a suction line (110; 114') and a degassing vessel (52; 50'), is provided which can be coupled via a mixing apparatus to a corresponding process control (20, 32; 19', 30').

31. Apparatus according to one of Claims 15 to 30, **characterized in that** for vapour precipitation, downstream of the concentrate separator (70; 77'), there is connected a vapour condensation apparatus (78, 79; 90', 92', 93') which comprises a cooling apparatus (78, 92') having a condensate collection vessel (79, 93').

## Revendications

1. Procédé de traitement de liquides, se présentant sous forme de liquides de préparation, en particulier d'eau de mer et/ou d'eau saumâtre, et/ou d'un déchet liquide et/ou d'eaux usées,
qui est formé d'un liquide de base, comprenant des impuretés y étant contenues et/ou dissoutes, les impuretés étant essentiellement liquides et/ou se présentant sous forme de gaz et/ou de sel, par séparation des impuretés vis-à-vis du liquide de base, sachant que la séparation est effectuée de manière que
le liquide de préparation soit amené, dans un but de préchauffage et de pré-épuration, au moins à un dispositif de préchauffage/séparation (5, 8, 9, 14, 15, 16; 10, 11, 12, 17, 18, 19; 5', 8', 9', 12', 13', 14'; 5', 10', 11', 15', 16', 17'), dans lequel le liquide de préparation est préchauffé à une température inférieure à la température d'ébullition du liquide de base, de sorte que les impuretés liquides, bouillant à une température inférieure par rapport celle à laquelle boue le liquide de base, s'évaporent et/ou que les épurations gazeuses soient entraînées de façon thermique et qu'ensuite les impuretés évaporées et/ou expulsées soient séparées,
en ce qu'au liquide de préparation, préchauffé et pré-épuré de cette manière, est amené un gaz porteur, guidé dans un circuit de gaz porteur fermé, et ce mélange est évaporé par apport de chaleur, pour former un mélange de vapeur humide de gaz porteur, de manière que le liquide de base soit évaporé et que les impuretés liquides, ayant des températures d'ébullition supérieures à la température d'ébullition du liquide de base, subsistent en tant que proportion de liquide résiduel et/ou en tant que celle contenue dans le liquide de base, à titre de saumure saline,
en ce que ce mélange vapeur-gaz support, humide, est amené à un séparateur de concentrat (30; 28'), dans lequel la proportion de liquide résiduel et/ou la saumure saline, se présentant sous forme de concentrat, est séparée,
en ce que le mélange vapeur-gaz support, débarrassé de la proportion de liquide résiduel et/ou de la saumure saline et, ainsi, épuré, est comprimé sous forme de mélange de vapeur sèche-gaz support et, ensuite, refroidi de manière
que le liquide de base soit condensé et séparé dans un séparateur à condensat (38; 36'), branché en aval, et
en ce que le gaz support, débarrassé du condensat, est ensuite amené au liquide de préparation, préchauffé et pré-épuré.

2. Procédé selon la revendication 1, **caractérisé en ce que** le liquide de préparation à traiter est amené successivement à au moins deux dispositifs de préchauffage/séparation (5, 8, 9, 14, 15, 16; 10, 11, 12, 17, 18, 19; 5', 8', 9', 12', 13', 14'; 5', 10', 11', 15', 16', 17') branchés l'un derrière l'autre.

3. Procédé selon la revendication 1 ou 2, **caractérisé en ce que** le liquide de préparation à traiter, ayant été préchauffé en au moins un échangeur de chaleur pour préchauffage (8, 11; 8', 10') de chaque dispositif de préchauffage/séparation (5, 8, 9, 14, 15, 16; 10, 11, 12, 17, 18, 19; 5', 8', 9', 12', 13', 14'; 5', 10', 11', 15', 16', 17'), est amené à un dispositif de détente (9, 12; 9', 11'), en tant que constituant d'un dispositif de séparation (9, 14, 15, 16; 12, 17, 18, 19; 9', 12', 13', 14'; 11', 15', 16', 17') d'un dispositif de préchauffage/séparation (5, 8, 9, 14, 15, 16; 10, 11, 12, 17, 18, 19; 5', 8', 9', 12', 13', 14'; 5', 10', 11', 15', 16', 17'), à l'aide duquel est effectuée une séparation des impuretés se présentant sous forme de vapeur et à bas point d'ébullition et/ou des impuretés se présentant sous forme de gaz.

4. Procédé selon la revendication 3, **caractérisé en ce que** les impuretés se présentant sous forme de vapeur à bas point d'ébullition et/ou les impuretés se présentant sous forme gazeuse sont amenées, en partant du dispositif de détente (9, 12; 9', 11'), en passant par une conduite (14, 17; 12', 15'), à un dispositif de refroidissement équipé d'un échangeur de chaleur (15, 18; 13', 16'), en tant qu'autre constituant du dispositif de séparation, et sont stockées dans un récipient collecteur (16, 19; 14', 17'), de manière que
lors du processus de refroidissement, une dépression soit produite dans la conduite (14, 17; 12', 15'), dépression au moyen de laquelle les impuretés séparées sont aspirées hors du dispositif de détente (9, 12; 9'. 11').

5. Procédé selon l'une des revendications 1 à 4, **caractérisé en ce que** chaque échangeur de chaleur pour préchauffage (8, 11; 8', 10') est un échangeur de chaleur condensat/liquide de préparation, à l'aide duquel un préchauffage est effectué, au moyen du condensat chaud provenant d'un récipient collecteur de condensat (43; 41').

6. Procédé selon l'une des revendications 1 à 5, **caractérisé en ce qu'**un apport de chaleur supplémentaire est effectué pour le préchauffage du liquide de préparation, dans un échangeur de chaleur concentrat/liquide de préparation (101; 80'), au moyen du concentrat chaud, provenant d'un récipient collecteur de concentrat (70; 77'), l'échangeur de chaleur concentrat/liquide de préparation (101; 80') étant branché en amont du au moins un dispositif de préchauffage/séparation (5, 8, 9, 14, 15, 16; 10, 11, 12, 17, 18, 19; 5', 8', 9', 12', 13', 14'; 5', 10', 11', 15', 16', 17').

7. Procédé selon l'une des revendications 1 à 6, **caractérisé en ce que** le liquide de préparation est préchauffé dans un échangeur de chaleur pour préchauffage (10; 11') du dispositif de préchauffage/séparation (10, 11, 12, 17, 18, 19; 5', 10', 11', 15', 16', 17'), après lequel le gaz support est amené au liquide de préparation, jusqu'à s'approcher aussi près que possible de la température d'évaporation du liquide de base.

8. Procédé selon l'une des revendications 1 à 7, **caractérisé en ce qu'**au moins une partie de l'apport de chaleur, prévu pour l'évaporation, afin de donner le mélange vapeur-gaz support humide, est effectuée en au moins un échangeur de chaleur évaporateur/à condensation (23, 27; 21', 25'), au moyen du mélange gaz support-vapeur sèche épuré, comprimé, s'échappant, mélange qui peut se condenser au moins partiellement dans ce au moins un échangeur de chaleur évaporateur/à condensation (23, 27; 21', 25'), du fait de la déperdition thermique.

9. Procédé selon l'une des revendications 1 à 8, **caractérisé en ce que** l'ensemble du gaz porteur est guidé en circuit fermé.

10. Procédé selon la revendication 9, **caractérisé**
**en ce qu'**un débit-masse partiel du gaz support ayant été séparé sur le séparateur de condensat (38; 36') est amené directement au liquide de préparation, et
**en ce qu'**un deuxième débit-masse partiel du gaz support séparé sur le séparateur de condensat (38; 36') est guidé pour le séchage, par l'intermédiaire d'un dispositif de séchage de gaz (55, 56; 53', 54', 55', 56'), et est ensuite retourné au liquide de préparation, en tant que gaz support séché.

11. Procédé selon l'une des revendications 1 à 10, **caractérisé en ce que** le liquide de préparation préchauffé et pré-épuré est extrêmement finement réparti dans un dispositif d'incorporation (21; 18') et est introduit dans le débit-masse de gaz sec.

12. Procédé selon l'une des revendications 1 à 11, **caractérisé en ce que** le liquide de préparation préchauffé est amené à un catalyseur, avant son introduction dans un dispositif d'incorporation (21; 18').

13. Procédé selon l'une des revendications 1 à 12, **caractérisé**
**en ce que** deux échangeurs de chaleur évaporateurs/à condensation (23, 27; 21', 25') sont utilisés, susceptibles d'être commutés en groupe individuel ou en groupe global, à l'aide de conduites de liaison et d'organes d'isolement (25, 29; 23', 27') correspondants, et/ou
**en ce que**, dans la conduite de pression gaz support/mélange de vapeur sèche (32; 30'), peut être raccordé par branchement un générateur de vapeur (120; 124'), muni d'un échangeur de chaleur, et/ou
**en ce que**, les buées, produites dans le récipient collecteur de concentrat (70; 77'), sont amenées, à l'état comprimé, à la conduite de pression gaz support/mélange de vapeur sèche (32; 30') et/ou à une conduite de contoumement (75; 86'), et/ou
**en ce qu'**un deuxième séparateur de condensat, réalisé sous forme de séparateur de condensat d'urgence/de décharge (82; 102'), est prévu, auquel, par l'intermédiaire de la conduite de contournement (75; 86'), lorsque les conduites principales (32; 30') sont bloquées ou réduites, un mélange gaz support/vapeur sèche et/ou des buées sont amenées, le gaz support épuré, issu de la sortie de gaz du séparateur de condensat d'urgence/décharge (82, 102') étant amené au circuit de gaz support, et le condensat, issu de la sortie de liquide, étant amené, directement ou indirectement, au système de sortie de liquide du premier séparateur à condensat (38; 36') ou, dans le cas d'une décharge d'urgence de pression, à un carter de pompe (2; 2'), à l'amenée (1; 1').

14. Procédé selon l'une des revendications 1 à 13, **caractérisé**
**en ce que**, en cas de perte de gaz support dans le circuit de gaz support, un rechargement en gaz support est effectué depuis un accumulateur de gaz support (103, 104, 105; 58', 59', 60') raccordé, et/ou en ce que, en amont de l'évacuation de condensat (53; 51'), est disposé un récipient de dégazage (52; 50'), à l'aide duquel des substances gazeuses encore dissoutes sont éliminées après détente, et/ou
**en ce que**, pour la purge de déconcentration, en particulier du ou des échangeurs de chaleur évaporateurs/à condensation (23, 27; 21', 25'), du condensat, provenant, de préférence, du récipient de dégazage (52; 50'), est susceptible d'être pompé dans les zones du système dans lesquels des boues se déposent, et/ou,
**en ce que**, en cas d'application d'une oxydation humide, à partir d'un récipient d'oxygène, avec un évaporateur d'oxygène (58, 61, 62; 65', 68', 69'), l'oxygène nécessaire est amené au gaz support sous la commande d'un dispositif de mesure d'oxygène.

15. Dispositif de traitement de liquides, se présentant sous forme de liquide de préparation, en particulier d'eau de mer et/ou d'eau saumâtre et/ou d'un déchet liquide et d'eaux usées, en particulier pour la mise en oeuvre du procédé selon les revendications 1 à 14, sachant que le liquide de préparation est formé d'un liquide de base, avec des impuretés y étant contenues et/ou des impuretés essentiellement liquides et/ou sous forme gazeuse et/ou sous la forme de sel,
avec au moins un dispositif de préchauffage/séparation (5, 8, 9, 14, 15, 16; 10, 11, 12, 17, 18, 19; 5', 8', 9', 12', 13', 14; 5', 10', 11', 15', 16', 17'), pour le préchauffage et la pré-épuration du liquide de préparation, dispositif comprenant chaque fois au moins un échangeur de chaleur de préchauffage (8, 11; 8', 10') et un dispositif de séparation (9, 14, 15, 16; 12, 17, 18, 19; 9', 12', 13', 14'; 11', 15', 16', 17'), branché en aval de celui-ci, de manière
que le liquide de préparation puisse être préchauffé, à l'aide de l'échangeur de chaleur pour préchauffage (8, 11; 8', 10'), à une température inférieure à la température d'ébullition du liquide de base, et
en ce que, à l'aide du dispositif de séparation (9, 14, 15, 16; 12, 17, 18, 19; 9', 12', 13', 14'; 11', 15', 16', 17') branché en aval, peuvent être séparées les impuretés liquides à ébullition à température plus basse que pour le liquide de base et/ou les impuretés sous forme gazeuse,
avec un dispositif d'incorporation (21; 18), branché en aval du au moins dispositif de préchauffage/séparation (5, 8, 9, 14, 15, 16; 10, 11, 12, 17, 18, 19; 5', 8', 9', 12', 13', 14'; 5', 10', 11', 15', 16', 17') et dans lequel un gaz support, guidé en circuit fermé, peut être amené au liquide de préparation, préchauffé et pré-épuré, par une conduite de gaz support (39; 37'), de manière que,
dans le dispositif d'incorporation (21; 18'), puisse être effectuée une répartition, de préférence, une répartition extrêmement fine, du liquide de préparation dans le gaz support, pour donner un mélange gaz support-liquide de préparation,
avec au moins un échangeur de chaleur évaporateur/à condensation (23, 27; 21', 25'), branché en aval du dispositif d'incorporation (21; 18'), pour l'évaporation du mélange gaz support-liquide de préparation pour donner un mélange de vapeur de gaz support humide, dans lequel le liquide de base est évaporé et les impuretés liquides, ayant des températures d'ébullition supérieures à la température d'ébullition du liquide de base, subsistent en tant que proportion de liquide résiduel, et/ou de sels contenus dans le liquide de base, sous forme de saumure saline,
avec un séparateur de concentrat (30; 28'), branché en aval du au moins un échangeur de chaleur évaporateur/à condensation (23, 27; 21', 25') pour la séparation de la proportion de liquide résiduel et/ou de la saumure saline, ainsi que d'un mélange sec de gaz support vis-à-vis du mélange de vapeur de gaz support humide,
avec un séparateur de condensat (38; 36'), branché en aval du séparateur de concentrat (30; 28'), auquel peut être amené le mélange gaz support-vapeur sèche, après le passage du au moins un échangeur de vapeur évaporateur/à condensation (23, 27; 21', 25') et la condensation se faisant à cet endroit du liquide de base, dans le but d'une séparation entre le liquide de base, sous forme de condensat, et le gaz support, le gaz support pouvant être retourné au dispositif d'incorporation (21; 18'), par le circuit de gaz support.

16. Dispositif selon la revendication 15, **caractérisé en ce que**, pour le préchauffage et la pré-épuration, au moins deux dispositifs de préchauffage/séparation (5, 8, 9, 14, 15, 16 ; 10, 11, 12, 17, 18, 19 ; 5', 8', 9', 12', 13', 14' ; 5', 10', 11', 15', 16', 17') sont branchés l'un derrière l'autre.

17. Dispositif selon la revendication 15 ou 16, **caractérisé en ce que** le dispositif de séparation (9, 14, 15, 16 ; 12, 17, 18, 19 ; 9', 12', 13', 14' ; 11', 15', 16', 17') de chaque dispositif de préchauffage/séparation (5, 8, 9, 14, 15, 16 ; 10, 11, 12, 17, 18, 19 ; 5', 8', 9', 12', 13', 14', ; 5', 10', 11', 15', 16', 17') présente un dispositif de détente (9, 12 ; 9', 11') branché en aval de l'échangeur de chaleur pour préchauffage (8, 11 ; 8', 10'), pour la séparation d'impuretés sous forme vapeur à plus bas point d'ébullition que le liquide de base et/ou d'impuretés gazeuses

18. Dispositif selon la revendication 17, **caractérisé en ce que** le dispositif de détente (9, 12) est formé d'un récipient de détente équipé d'une pompe.

19. Dispositif selon la revendication 17, **caractérisé en ce que** le dispositif de détente (9' ; 11') est formé par une installation à membrane de pervaporation.

20. Dispositif selon l'une des revendications 17 à 19, **caractérisé en ce que** en aval du dispositif de détente (9, 12 ; 9', 11') est chaque fois branché un dispositif de refroidissement avec un échangeur de chaleur (15, 18 ; 13', 16') en tant que composant supplémentaire du dispositif de séparation, et
**en ce qu'**en aval du dispositif de refroidissement, muni d'un échangeur de chaleur (15, 18 ; 13', 16'), est installé un récipient collecteur 16, 19 ; 14', 17') en tant que composant supplémentaire du dispositif de séparation, de manière
que, lors d'un processus de refroidissement, une dépression puisse être produite dans une conduite d'aspiration (14, 17 ; 12', 15'), dépression au moyen de laquelle on peut aspirer hors du dispositif de détente (9, 12 ; 9', 11') les impuretés ayant été séparées.

21. Dispositif selon l'une des revendications 15 à 20, **caractérisé en ce que** chaque échangeur de chaleur pour préchauffage (8,-11 ; 8', 10') est formé par un échangeur de chaleur condensat/liquide de préparation, et/ou
**en ce que**, pour effectuer un apport de chaleur supplémentaire en vue du préchauffage du liquide de préparation, en amont du au moins un dispositif de préchauffage/séparation (5, 8, 9, 14, 15, 16 ; 10, 11, 12, 17, 18, 19 ; 5', 8', 9', 12', 13', 14', ; 5', 10', 11', 15', 16', 17') est installé un échangeur de chaleur concentrat/liquide de préparation (101 ; 80')

22. Dispositif selon l'une des revendications 15 à 21, **caractérisé**
**en ce qu'**au moins une zone partielle de la conduite d'amenée, du séparateur de concentrat (30 ; 28') au séparateur de condensat (38; 36'), est réalisée sous forme de conduite à pression de mélange gaz support-vapeur sèche (32 ; 30'), avec un compresseur (31 ; 29') branché en aval, pour assurer l'augmentation de pression et de température du mélange gaz support-vapeur sèche et/ou
dans les conduites à pression (32 ; 30') pour la surveillance du fonctionnement est disposé au moins un dispositif de mesure, de préférence au moins un dispositif de mesure de débit et/ou au moins un dispositif de mesure de température et/ou au moins un dispositif de mesure de pression, ces dispositifs de mesure faisant partie d'un circuit de régulation.

23. Dispositif selon la revendications 22, **caractérisé en ce que** la conduite à pression (32 ; 30') est susceptible d'être couplée, de préférence dans le cas où la chaleur de compression est insuffisante, en particulier en fonctionnement en démarrage, à un générateur de vapeur (120 ; 124'), le cas échéant par l'intermédiaire d'un échangeur de chaleur, et
**en ce que**, pour un branchement de raccordement et/ou un branchement d'isolation automatisé du générateur de vapeur (120 ; 124') sont prévus, côté conduite de processus, au moins un organe de réglage, de préférence au moins une soupape de régulation (33, 121, 122 ; 31', 125', 126') et au moins un dispositif de mesure, de préférence un dispositif de mesure de température et/ou un dispositif de mesure de pression, qui sont chacun couplés à un régulateur.

24. Dispositif selon l'une des revendications 15 à 23,
**caractérisé en ce que**
le gaz support est guidé, entre un séparateur à condensat (38 ; 36') et un dispositif d'incorporation de gaz support (21 ; 18'), en un circuit de gaz support fermé, et
**en ce qu'**un débit-masse partiel du gaz support, ayant été séparé au séparateur de condensat (38 ; 36'), est susceptible d'être directement amené au dispositif d'incorporation (21 ; 18'), par l'intermédiaire d'une conduite d'amenée de gaz support (39 37'), et
**en ce qu'**un deuxième débit-masse partiel, supplémentaire, du gaz support, ayant été séparé au séparateur de condensat (38 ; 36'), est guidé au dispositif d'incorporation (21 ; 18'), dans un but de séchage, par l'intermédiaire d'un dispositif de séchage de gaz (55, 56 ; 53', 54', 56').

25. Dispositif selon la revendication 24, **caractérisé en ce que** dans le circuit de gaz support, derrière un récipient collecteur de condensat (43), est disposé un sécheur à gaz (55) pour le séchage du gaz support, en particulier de gaz support résiduel humide issu d'un récipient collecteur de condensat (43), en aval duquel est de nouveau branché un séparateur à condensat (56).

26. Dispositif selon la revendication 24, **caractérisé en ce que** le dispositif de séchage de gaz est formé par une membrane de pervaporation (53') avec un dispositif de refroidissement et un échangeur de chaleur (55'), ainsi qu'un récipient collecteur (56') branché en aval.

27. Dispositif selon l'une des revendications 24 à 26, **caractérisé en ce que**, en partant du séparateur à condensat (38 ; 36'), par l'intermédiaire d'un récipient collecteur de condensat (43 ; 41'), au moins une conduite de gaz (54 ; 52'), avec interposition du dispositif de séchage de gaz (55, 56 ; 53', 54', 56'), est retournée dans un circuit à la conduite d'amenée de gaz support (39; 37'), de préférence, avec interposition d'un compresseur (108 ; 63').

28. Dispositif selon l'une des revendications 15 à 27, **caractérisé en ce que**, dans le circuit de support, peut être branché un accumulateur de gaz support (103 ; 53'), pour l'équilibrage des pertes de gaz support, et/ou
**en ce que** pour une oxydation humide dans le circuit de gaz support, de préférence dans une conduite de gaz (54 ; 52'), allant du récipient collecteur de condensat (43 ; 41') à la conduite d'amenée de gaz support (39 ; 37'), peut être branché un récipient à oxygène (58 ; 65') avec un évaporateur d'oxygène, et/ou
**en ce que**, sur l'évacuation de condensat, est prévu un récipient de dégazage (52 ; 50').

29. Dispositif selon l'une des revendications 15 à 28, **caractérisé**
**en ce qu'**un deuxième séparateur de condensat est prévu à titre de séparateur de condensat d'urgence/décharge (82; 102'), auquel, côté entrée, par l'intermédiaire d'une conduite de dérivation (75 ; 86') peuvent être amenées des buées venant du récipient collecteur de concentrat (70 ; 77') et/ou un mélange de vapeur sèche de gaz support, par l'intermédiaire de conduites de dérivation débouchant dans la conduite de dérivation et concernant une conduite de pression (32 ; 30'), entre le séparateur de concentrat (30 ; 28') et le premier séparateur à condensat (38 ; 36'), et
**en ce que** le séparateur à condensat d'urgence/décharge (82 ; 102') présente, côté sortie des gaz, une conduite d'évacuation (95 ; 103') allant vers une conduite d'amenée de gaz support (39 ; 37'), vers le dispositif d'incorporation (21 ; 18') et/ou au moins une conduite (97 ; 106') allant vers une conduite de gaz (54 52') partant en ramifications du récipient collecteur de condensat (43 ; 41') d'un circuit de gaz support séparé, le séparateur de condensat d'urgence/décharge présentant en outre, côté sortie des condensats, au moins une conduite de condensat (92) allant au récipient collecteur de condensat (43), et
**en ce que**, pour une décharge d'urgence, de préférence est prévu un filtre d'évacuation d'air (65 ; 72'), sachant que la décharge, en partant de la conduite de pression (32 ; 30'), s'effectue par l'intermédiaire d'un premier composite de conduites (75, 83, 85, 87 ; 86', 96', 98', 100') du séparateur à condensat d'urgence/décharge (82 ; 102'), d'un deuxième composite de conduite (95, 97, 54, 63 ; 103', 106', 52', 70'), ainsi que du filtre d'évacuation d'air (65 ; 72'), dans l'espace exempt de pression de fonctionnement, sachant que le condensat, produit dans le séparateur à condensat d'urgence/décharge (82 ; 102'), peut être amené à un carter de pompe (2; 2'), à l'alimentation (1 ; 1'), par une conduite (89 ; 108')

30. Dispositif selon l'une des revendications 15 à 19, **caractérisé**
**en ce qu'**au récipient collecteur de concentrat (70; 77'), pour le cas d'une formation de buée, est branché aval un compresseur à buées (73, 73a ; 84', 88') et/ou
**en ce que**, pour effectue la purge de déconcentration des boues, au moins du ou des échangeurs de chaleur évaporateurs/à condensation (23, 27 ; 21', 25'), est prévu un dispositif de purge de déconcentration des boues, de préférence, formé d'une pompe à condensat (112 ; 116'), d'une conduite d'aspiration (110 ; 114') et d'un récipient de dégazage (52 ; 50') susceptible d'être couplé dans une conduite de processus (20, 32; 19', 30') correspondante, par l'intermédiaire d'un dispositif d'incorporation.

31. Dispositif selon l'une des revendications 15 à 30, **caractérisé en ce que**, pour condenser les buées, on branche, en aval du séparateur à condensat (70 ; 77'), un dispositif de condensation de buées (78, 92'), comprenant un dispositif de refroidissement (78, 92') avec un récipient collecteur de condensat (79, 93').
